# EUROPEAN PATENT SPECIFICATION

(11) **EP 2 273 084 B1**
(45) Date of publication and mention of the grant of the patent: **06.07.2016**
(21) Application number: 09725019.5
(22) Date of filing: 16.02.2009
(51) Int. Cl.: F01N 3/28, B01D 53/94, F01N 3/24, F01N 13/16, F01N 1/08

(54) **CATALYST APPARATUS, METHOD FOR PRODUCTION OF CATALYST APPARATUS, AND STRUCTURE RETAINING CATALYST CARRIER**
KATALYSATORVORRICHTUNG, VERFAHREN ZUR HERSTELLUNG EINER KATALYSATORVORRICHTUNG UND DEN KATALYSATORTRÄGER HALTENDE STRUKTUR
APPAREIL CATALYSEUR, PROCEDE DE PRODUCTION D'UN APPAREIL CATALYSEUR ET STRUCTURE DE RETENUE DE SUPPORT DE CATALYSEUR

(30) Priority: 26.03.2008 JP 2008080183; 31.03.2008 JP 2008091849; 31.03.2008 JP 2008093293; 31.03.2008 JP 2008093415
(43) Date of publication of application: 12.01.2011
(73) Proprietor: Honda Motor Co., Ltd., Minato-ku Tokyo 107-8556 (JP)
(72) Inventor: MAEDA, Kazuhisa, Wako-shi Saitama 351-0193 (JP); MITSUKAWA, Makoto, Wako-shi Saitama 351-0193 (JP); OKUBO, Katsunori, Wako-shi Saitama 351-0193 (JP); HORIMURA, Hiroyuki, Wako-shi Saitama 351-0193 (JP); YAMAGUCHI, Shigehiro, Wako-shi Saitama 351-0193 (JP)
(74) Representative: Quinterno, Giuseppe
(86) International application number: PCT/JP2009/000602
(87) International publication number: WO 2009/118986

(56) References cited:
- JP-A- 6 129 248
- JP-A- 2002 106 337
- JP-A- 2004 143 956
- JP-A- 2005 074 243
- JP-A- 2007 016 785
- JP-T- 2008 511 795
- JP-U- 5 047 333
- US-A1- 2002 068 025
- US-A1- 2002 127 154

## Description

### Technical Field

The present invention relates to catalyst devices according to the preambles of claims 1, 4 and 13, that purify an exhaust gas of an internal combustion engine, and a manufacturing method of a catalyst device according to the preamble of claim 12.

### Background Art

Catalyst devices of the above kinds and corresponding manufacturing methods are disclosed in US 2002/127154 A1 and US 2002/068025 A1.

As a catalyst device that purifies an exhaust gas of an engine or the like, the one containing a catalyst carrier formed in a cylindrical shape and made of ceramics in an outer cylinder and having a corrugated plate material for buffer disposed between the outer cylinder and the catalyst carrier has been used (see JP-A-H02-43955, for example). Also, a catalyst converter containing a catalyst carrier having a honeycomb structure in an outer cylinder is known (see JP-A-H11-33410, for example). With the configuration described in JP-A-H11-33410, a ceramic mat as a buffer material is wrapped around the catalyst carrier, which is contained in the outer cylinder.

In the catalyst device disclosed in JP-A-H11-33410, by providing a stopper member in contact with an end face on the downstream side of an exhaust gas in the catalyst carrier, the catalyst carrier is prevented from moving to the downstream side of the exhaust gas by a pressure of the exhaust gas. However, if separate components such as a stopper member and the like are provided, the number of the components is increased and the structure becomes complicated. Thus, simpler fixation of the catalyst carrier has been in demand.

### Summary of the invention

The present invention was made in view of the above circumstances and has an object, in a catalyst device that contains a catalyst carrier in an outer cylinder, to fix the catalyst carrier to the outer cylinder with a simple structure.

In order to solve the problem, the present invention provides catalyst devices having the features defined in claims 1, 4 and 13.

According to a configuration, since the high friction portion that prevents movement of at least either one of the catalyst carrier or the mat is disposed between the catalyst carrier and the outer cylinder, the catalyst carrier is fixed to the outer cylinder by friction at the high friction portion. That is, the catalyst carrier is fixed to the outer cylinder at least by the high friction portion between the catalyst carrier and the mat or the high friction portion between the mat and the outer cylinder. Thus, the catalyst carrier can be fixed to the outer cylinder with a simple structure.

Also, the high friction portion may be disposed in a region including at least either one of a portion in contact with an end portion of the mat or its vicinity on the inner face of the outer cylinder.

In this case, since the high friction portion with increased friction coefficient is disposed on the inner face of the outer cylinder, the mat is fixed to the inner face of the outer cylinder by friction with the high friction portion. Therefore, the catalyst carrier can be fixed to the outer cylinder by the friction between the mat and the outer cylinder, and the catalyst carrier can be fixed to the outer cylinder by a simple structure. And since the end portion of the mat is in contact with the high friction portion on the inner face of the outer cylinder or since the mat and the high friction portion are brought into contact with each other if the mat is to be displaced by a pressure of an exhaust gas, the catalyst carrier can be fixed to the outer cylinder by the friction between the mat and the outer cylinder. Therefore, the catalyst carrier can be fixed to the outer cylinder by a simple structure.

Also, one end of the outer cylinder located on the downstream side with respect to the flow of the exhaust gas may be extended farther than the end portion of the mat, and the high friction portion may be formed on this extended portion.

In this case, if the mat is to be displaced to the downstream side of the exhaust gas, the mat is brought into contact with the high friction portion disposed on the downstream side of the exhaust gas and is stopped by the friction with the high friction portion. Therefore, the catalyst carrier can be fixed to the outer cylinder by the friction between the mat and the outer cylinder.

Also, since the high friction portion is disposed at the end on the downstream side of the exhaust gas in the outer cylinder, when the catalyst carrier is pressed into the outer cylinder together with the mat with respect to the outer cylinder provided with the high friction portion in advance during a manufacturing process of a catalyst device, the catalyst carrier can be pressed in from the end on the side opposite to the high friction portion. Thus, since the high friction portion does not obstruct the press-fit, the catalyst carrier can be easily pressed in, whereby manufacture is facilitated.

Also, the high friction portion may be formed by making the same catalyst as the catalyst carried by the catalyst carrier adheres to the inner face of the outer cylinder.

In this case, since the high friction portion is a portion whose surface roughness is made rough by having the same catalyst as that of the catalyst carrier adhere to the inner face of the outer cylinder, it can be formed easily.

Also, the high friction portion may be disposed at least at a part of the portion in contact with the mat on the surface of the catalyst carrier.

In this case, since the high friction portion with an increased friction coefficient is disposed at least at a part of the portion where the surface of the catalyst carrier is in contact with the mat, the catalyst carrier is fixed to the mat by the friction with the high friction portion. Thus, the catalyst carrier can be fixed to the mat by the friction between the catalyst carrier and the mat, and the catalyst carrier can be fixed to the outer cylinder with a simple structure.

Also, the high friction portion may be formed by making the same catalyst as the catalyst carried inside the catalyst carrier adhere to the surface of the catalyst carrier.

In this case, since the high friction portion is a portion whose surface roughness is made rough by having the same catalyst as the catalyst carrier adhere to the surface of the catalyst carrier, it can be formed easily.

Also, the catalyst carrier may be formed by ceramics.

In this case, the catalyst carrier can be easily made light by forming the catalyst carrier by ceramics.

Moreover, it may be so configured that the surface roughness on the surface of the catalyst carrier is made rough before sintering the ceramics and then, the catalyst carrier is sintered and in this case, the surface roughness on the surface of the catalyst carrier can be made rough, and a high friction portion can be easily disposed.

Also, the high friction portion may be formed by having the catalyst adhere also to the surface of the catalyst carrier in a process in which the catalyst is made to be carried inside the catalyst carrier.

In this case, in the process in which the catalyst is carried inside the catalyst carrier, since the high friction portion can be formed by having the catalyst adhere also to the surface of the catalyst carrier at the same time, a process only to dispose the high friction portion is not needed, and the high friction portion can be formed easily.

Also, in the above configuration, at least at a part of the inner face of the outer cylinder, a predetermined material that can be oxidized more easily than a stainless material in the exhaust gas of the internal combustion engine may be arranged.

In this case, since the predetermined material that can be oxidized more easily than the stainless material is arranged on the inner face of the outer cylinder, the predetermined material is oxidized with use of the catalyst device, and the surface roughness on the surface of the predetermined material is made rough. Thus, since the friction coefficient of surface of the predetermined material is increased, the mat and the catalyst carrier can be fixed to a predetermined position by the friction between the predetermined material and the mat. Also, since the predetermined material does not have a high surface roughness in a state before use in which the oxidization has not progressed yet, smooth press-fit can be performed in the process of pressing in the catalyst carrier with the mat into the outer cylinder. Then, after start of use of the catalyst device, when the predetermined material arranged on the outer cylinder is exposed to the exhaust gas and quickly oxidized by an influence of an oxidant gas in the exhaust gas and / or a high temperature of the exhaust gas and the surface roughness is made rough. Therefore, the mat and the catalyst carrier can be fixed quickly after the start of use. As mentioned above, according to the configuration of the present invention, the mat and the catalyst carrier can be fixed with a simple configuration.

Here, the predetermined material that can be oxidized more easily than the stainless material is a material in which an oxidization reaction progresses under a condition that a passive state film of the stainless material is not oxidized/deteriorated, for example. That is, a material oxidized at a temperature lower than the temperature at which the passive state film of the stainless material is oxidized/deteriorated or a material in which oxidization progresses under an atmosphere of an oxidant gas in which the passive state film of the stainless material can be kept stable, and that is specifically an iron material or the like. Also, the stainless material here is SUS430 or the like.

Also, the predetermined material is exposed to at least a part of the inner face of the outer cylinder, and the entire outer cylinder may be formed by the predetermined material or only a part may be formed by the predetermined material so as to be exposed to the inner face of the outer cylinder.

In the above configuration, the predetermined material may be a material in which oxidization progresses at a temperature lower than the temperature at which the stainless material is oxidized in the exhaust gas of the internal combustion engine.

In this case, in the exhaust gas, by using a material in which oxidization progresses at a lower temperature as the predetermined material, if the material is exposed to the exhaust gas, it is quickly oxidized and the surface roughness thereof is made rough, and thus, even in an environment in which the exhaust gas temperature cannot be raised easily, the mat and the catalyst carrier can be fixed quickly after the material is exposed to the exhaust gas.

Also, in the above configuration, the predetermined material may be formed by SP (general carbon steel) material.

In this case, by using carbon steel, which is inexpensive and excellent in workability, a configuration that can easily fix the catalyst carrier and the mat can be easily realized.

Also, in the above configuration, in the predetermined material, an additive material of the same composition as the material forming the mat or a composition containing a common element with the material may be added, and the predetermined material may be arranged at a position in contact with the mat on the inner face of the outer cylinder.

In this case, the additive material of the same composition as the material forming the mat or a composition containing a common element with the material is added to the predetermined material arranged on the inner face of the outer cylinder, and the predetermined material is in contact with the mat. Therefore, since affinity between the inner face of the outer cylinder and the mat in contact with each other is extremely high, the mat and the inner face of the outer cylinder can be made to adhere to each other favorably, and the mat and the catalyst carrier can be fixed.

Also, the present invention provides a manufacturing method of a catalyst device, having the features defined in claim 12.

According to this manufacturing method, after the assembly unit is formed in the first process, the catalyst is made to adhere to the inside of the catalyst carrier in the second process and at the same time, the catalyst can be made to adhere to the inner face of the outer cylinder, and thus, a process only to make the catalyst adhere to the inner face of the outer cylinder is not required. Moreover, by sintering in the third process, the catalyst can be firmly made to adhere and at the same time, the mat can be fastened by heating to the inner face of the outer cylinder so as to fix the mat to the outer cylinder. Thus, a process only to fasten the mat by heating is not required. Therefore, manufacturing efficiency is good, and the catalyst device can be manufactured easily.

Also, since the catalyst carrier and the mat can be contained in the outer cylinder before adhesion of the catalyst to the inner face of the outer cylinder, the assembly unit can be forme 11 asily. For example, if the catalyst carrier and the mat are to be contained in the outer cylinder by press-fit, since the catalyst does not adhere to the inner face of the outer cylinder, frictional resistance during the press-fit is small, and the press-fit can be performed easily.

### Advantageous Effects of Invention

With a catalyst device according to the present invention, since the catalyst carrier can be fixed to the outer cylinder by friction at least between the catalyst carrier and the mat or by friction between the mat and the outer cylinder, the catalyst carrier can be fixed to the outer cylinder with a simple structure.

Also, since the catalyst carrier can be fixed to the outer cylinder by the friction between the mat and the outer cylinder, the catalyst carrier can be fixed to the outer cylinder with a simple structure. Also, since the end portion of the mat is in contact with the high friction portion on the inner face of the outer cylinder or the mat and the high friction portion are brought into contact with each other if the mat is to be displaced by a pressure of an exhaust gas, the catalyst carrier can be fixed to the outer cylinder by friction between the mat and the outer cylinder. Therefore, the catalyst carrier can be fixed to the outer cylinder with a simple structure.

Also, if the mat is to be displaced to the downstream side of the exhaust, since the mat is fixed to the outer cylinder by friction with the high friction portion disposed on the downstream side of the exhaust, the catalyst carrier can be fixed to the outer cylinder by friction between the mat and the outer cylinder, and the catalyst carrier can be fixed to the outer cylinder with a simple structure.

Moreover, since the high friction portion is a portion where surface roughness is made rough by making the same catalyst as the catalyst carrier adhere to the inner face of the outer cylinder, it can be formed easily.

Furthermore, since the catalyst carrier can be fixed to the outer cylinder by friction between the catalyst carrier and the mat, the catalyst carrier can be fixed to the outer cylinder with a simple structure.

Also, since the high friction portion is a portion where the surface roughness is made rough by making the same catalyst as the catalyst carrier adhere to the surface of the catalyst carrier, it can be formed easily.

Also, since the catalyst carrier is formed by ceramics, the catalyst carrier can be easily made light-weighted.

Moreover, since the predetermined material arranged on the inner face of the outer cylinder is oxidized with use of the catalyst device and the surface roughness on the surface thereof is made rough, the mat and the catalyst carrier can be fixed at a predetermined position by friction between the predetermined material and the mat. Also, since the predetermined material does not have high surface roughness in a state in which oxidization has not progressed before start of the use, in the process of pressing the catalyst carrier with the mat into the outer cylinder, they can be pressed in smoothly. Therefore, the mat and the catalyst carrier can be reliably fixed to a predetermined position with a simple configuration.

Also, even in an environment in which the exhaust gas temperature cannot be raised high easily, the mat and the catalyst carrier can be quickly fixed after they are exposed to the exhaust gas.

Moreover, by using carbon steel, which is inexpensive and excellent in workability, the configuration to fix the catalyst carrier and the mat can be easily realized with simple configuration.

Furthermore, since the additive material of the same composition as the material constituting the mat or of a composition containing a common element with the material is added to the predetermined material arranged on the inner face of the outer cylinder, affinity between the inner face of the outer cylinder and the mat in contact with each other is extremely high, and the mat can be favorably made to adhere to the inner face of the outer cylinder and the mat and the catalyst carrier can be firmly fixed to a predetermined position.

Also, since the catalyst is made to adhere also to the surface of the catalyst carrier at the same time as the adhesion to the inside of the catalyst carrier, a process only to dispose a high friction portion is not required, and a high friction portion can be formed easily.

Moreover, since a process only to make the catalyst adhere to the inner face of the outer cylinder and a process only to fasten the mat by heating are not required, manufacturing efficiency is good, and the catalyst device can be manufactured easily. Moreover, since the catalyst carrier and the mat can be contained in the outer cylinder before the catalyst is made to adhere to the inner face of the outer cylinder, the assembly unit can be formed easily.

### Brief Description of Drawings

Fig. 1 is a schematic diagram illustrating an exhaust muffler provided with a catalyst device according to a first embodiment.
Fig. 2 is an exploded perspective diagram illustrating a configuration of the catalyst device.
Fig. 3 is a sectional view of the catalyst device.
Fig. 4 is a schematic diagram illustrating an exhaust muffler provided with a catalyst device according to a second embodiment.
Fig. 5 is an exploded perspective diagram illustrating a configuration of the catalyst device.
Fig. 6 is a sectional view of the catalyst device.
Fig. 7 is a schematic diagram illustrating an exhaust muffler provided with a catalyst device according to a third embodiment.
Fig. 8 is an exploded perspective diagram illustrating a configuration of the catalyst device.
Fig. 9 is a sectional view of the catalyst device.
Fig. 10 is a schematic diagram illustrating a manufacturing method of the catalyst device.
Fig. 11 is a schematic diagram illustrating a method of making a catalyst adhere to a catalyst carrier.
Fig. 12 is a schematic diagram illustrating a method of making a catalyst adhere to a catalyst carrier.
Fig. 13 is a schematic diagram illustrating an exhaust muffler provided with a catalyst device according to a seventh embodiment.
Fig. 14 is an exploded perspective diagram illustrating a configuration of the catalyst device.
Fig. 15 is a sectional view of the catalyst device.
Fig. 16 is a graph illustrating a high-temperature resistance of an outer cylinder of the catalyst device.
Fig. 17 is a schematic diagram illustrating an exhaust muffler provided with a catalyst device according to an eighth embodiment.
Fig. 18 is a sectional view of the catalyst device.
Fig. 19 is a sectional view illustrating an exhaust pipe structure provided with a catalyst device according to a ninth embodiment.
Fig. 20 is a sectional view illustrating an exhaust pipe structure provided with a catalyst device according to a tenth embodiment.
Fig. 21 is an enlarged diagram illustrating a configuration of a bonded portion in the tenth embodiment.
Fig. 22 is a sectional view of an exhaust muffler provided with a ceramics catalyst device according to an eleventh embodiment.
Fig. 23 is a sectional view of the exhaust muffler seen from a direction different from that in Fig. 22.
Fig. 24 is a diagram offered for explanation of a layout of the catalyst device and an exhaust-pipe end portion.
Figs. 25 are explanatory diagrams of a variation of the eleventh embodiment, in which Fig. 25A is a side sectional view illustrating a catalyst device according to the variation together with a peripheral configuration and Fig. 25B is a sectional view of the catalyst device in Fig. 25A. Reference Signs List
1, 4, 7, 8, 9, 50, 150 catalyst device
   5 fine pore
   10, 40, 60 catalyst carrier
   12, 42, 62 holding mat
   13, 43, 63, 73, 83, 84, 421 outer cylinder
   14, 64, 74, 114 high friction portion
   90, 92 exhaust pipe made of titanium
   91 tapered portion
   93, 95 exhaust pipe made of stainless
   94, 96 bonding piece
   75, 100, 106, 200, 300 400 exhaust muffler
   110, 410 exhaust pipe
   120, 420 cylindrical main body
   121 front end portion
   122 rear end portion
   140, 141 exhaust pipe structure

### Description of Embodiments

Embodiments to which the present invention is applied will be described below referring to the attached drawings.

### [First Embodiment]

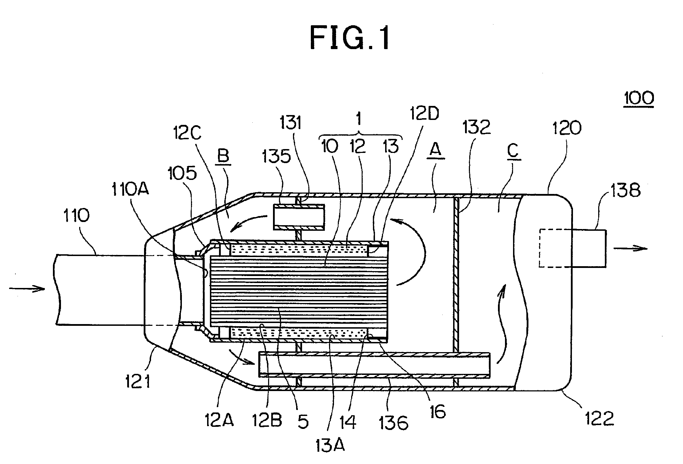

Fig. 1 is a diagram schematically illustrating an exhaust muffler 100 provided with a catalyst device 1 according to a first embodiment of the present invention. The exhaust muffler 100 is disposed on a motor cycle, connected to a rear end of an exhaust pipe 110 extending from an engine (not shown) of the motor cycle and functions as a silencer that decompresses a high-temperature/high-pressure exhaust gas having passed through the exhaust pipe 110 and exhausts it to the outside.

The exhaust muffler 100 has a cylindrical main body 120 to which the single exhaust pipe 110 extending from the engine is connected, and the catalyst device 1 provided with a catalyst carrier 10 made of ceramics is supported in the cylindrical main body 120. The catalyst device 1 includes the catalyst carrier 10 that carries a catalyst, an outer cylinder 13 that contains the catalyst carrier 10, and a holding mat 12 disposed between the catalyst carrier 10 and the outer cylinder 13. And the catalyst device 1 includes the catalyst carrier 10 around which the holding mat 12 is wrapped contained in the outer cylinder 13.

The cylindrical main body 120 has an internal space thereof divided into a plurality of (three in this example) expansion chambers A, B, and C by a plurality of (two pieces in this example) bulkheads 131 and 132, in which an end portion 110A of the exhaust pipe 110 penetrates a front end portion 121 of the cylindrical main body 120 and is fixed into the expansion chamber B, and the catalyst device 1 penetrates and is fixed to the first bulkhead 131 closest to the end portion 110A of the exhaust pipe 110.

The catalyst device 1 makes the end portion 110A side of the exhaust pipe 110 communicate with the expansion chamber A through a large number of fine pores 5 formed in the catalyst carrier 10, and an exhaust gas exhausted from the end portion 110A is purified when passing through the catalyst carrier 10. Here, an outer diameter of the catalyst device 1 is formed larger than an outer diameter of the exhaust pipe 110, and a substantially ring-shaped positioning member 105 for positioning the end portion 110A substantially coaxially with the catalyst carrier 10 is interposed between an outer-cylinder inner face 13A, which is an inner face of the outer cylinder 13, and an outer face of the end portion 110A.

Also, in the first bulkhead 131, a first communication pipe 135 and a second communication pipe 136 penetrate and are fixed at positions displaced from the catalyst device 1, in which the first communication pipe 135 makes the expansion chamber A and the expansion chamber B communicate with each other, while the second communication pipe 136 crosses the expansion chamber A and penetrates the second bulkhead 132 so as to make the expansion chamber B and the expansion chamber C communicate with each other. At a rear end potion 122 of the cylindrical main body 120, a pipe member 138 constituting a tail pipe penetrates and is fixed, while the pipe member 138 makes the expansion chamber C and a space outside the exhaust muffler 100 communicate with each other.

In the exhaust muffler 100, the exhaust gas exhausted from the end portion 110A of the exhaust pipe 110 passes through the catalyst device 1 and flows into the expansion chamber A in the exhaust muffler 100 as shown by an arrow in Fig. 1, reverses the flow direction and passes through the first communication pipe 135 and flows into the expansion chamber B, reverses the flow direction again and passes through the second communication pipe 136 and flows into the expansion chamber C, and is exhausted to the outside through the pipe member 138 constituting the tail pipe.

Since a sectional area of the cylindrical main body 120 is formed larger than the exhaust pipe 110 inserted into the cylindrical main body 120, the exhaust gas is decompressed when flowing into each of the expansion chambers A to C. Also, since the catalyst device 1 is arranged in the cylindrical main body 120 of the exhaust muffler 100, a layout space for the catalyst device 1 is easily ensured. Also, since the catalyst device 1 is arranged substantially coaxially with the end portion 110A of the exhaust pipe 110, the exhaust gas exhausted from the end portion 110A of the exhaust pipe 110 can be made to flow into the catalyst device 1 without changing its flow direction.

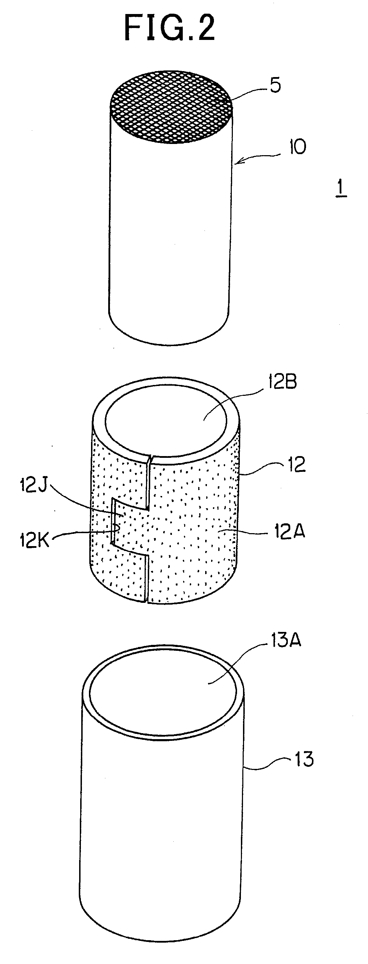

Fig. 2 is an exploded perspective view illustrating the configuration of the catalyst device 1.

The catalyst carrier 10 is a honeycomb-state porous structure body formed in a cylindrical shape and having a large number of fine pores 5 extending along the axial direction inside an outer shell of the cylindrical shape and an internal surface area is formed large. Here, a sectional shape of the catalyst carrier 10 is arbitrary, and the sectional shape is not limited to circular but may be an oval, for example.

On a wall of each fine pore 5, platinum, rhodium, and palladium that decompose an exhaust gas component is carried as a catalyst.

As a base material of the catalyst carrier 10, a porous ceramics is used, and a catalyst such as platinum, rhodium, palladium and the like can be easily carried. Here, as a preferable example of a material of the ceramics, various heat resistant ceramics including cordierite, mullite, alumina, and aluminate of alkali earth metal, silicon carbide, silicon nitride or the like or their similar substances can be used. Also, an outer circumferential face of the catalyst carrier 10 is formed with higher surface roughness and friction coefficient.

The holding mat 12 is formed by compressing or integrating ceramic fibers into a lengthy mat state, and it is wrapped around the outer circumferential face of the catalyst carrier 10. At one end of the holding mat 12, a projection-shaped mating portion 12J is formed, while at the other end, a recess-shaped mating portion 12K is formed, and thus, when the holding mat 12 is wrapped around the catalyst carrier 10, the two mating portions 12J and 12K mate with each other and they are reliably engaged. Also, since the holding mat 12 is a collection in which fibers entwine each other, it has a relatively high elasticity. Here, the material of the holding mat 12 may be anything as long as it has heat resistance and elasticity, and integration of fibrous metals or glass wool or the like can be also used. Since the holding mat 12 has elasticity, it can protect the catalyst carrier 10 made of ceramics from vibration or impact.

Moreover, the holding mat 12 is a collection in which fibers entwine each other and numerous fine clearances are formed on the surface and the inside thereof. Thus, the surface of the holding mat 12 is in a state in which numerous fine projections and recesses are formed, and since the surface roughness is high, the friction coefficient on the surface is high. Therefore, since friction is large on the contact face between the catalyst carrier 10 and the holding mat 12, the catalyst carrier 10 is fixed to the holding mat 12.

As the material of the outer cylinder 13, a metal with high strength and heat resistance is used, and a steel material such as stainless can be used, for example.

Methods of containing the catalyst carrier 10 around which the holding mat 12 is wrapped in the outer cylinder 13 include press-fitting, canning, winding and tightening and the like.

In order to press the catalyst carrier 10 into the outer cylinder 13, the catalyst carrier 10 around which the holding mat 12 is wrapped is pushed into the outer cylinder 13 formed cylindrically in advance.

In order to contain the catalyst carrier 10 by canning, the catalyst carrier 10 around which the holding mat 12 is wrapped is surrounded by split pieces formed so as to split a cylinder into a plurality of pieces along the axial direction, and the split pieces are bonded so as to form the outer cylinder 13.

Also, in order to contain the catalyst carrier 10 by winding and tightening, a plate material is wrapped around the catalyst carrier 10 around which the holding mat 12 is wrapped, and end portions of the plate material are bonded together so as to form the outer cylinder 13. Here, the bonding of the canning and winding and tightening is performed by welding, adhering, bolting or the like. Also, the holding mat 12 is sandwiched between the outer cylinder 13 and the catalyst carrier 10 and contained in a compressed state, not using the methods of press-fitting, canning, winding and tightening or the like.

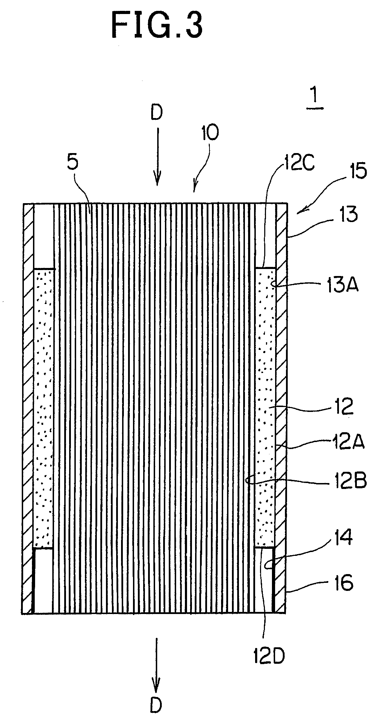

Fig. 3 is a sectional view of the catalyst device 1.

In the catalyst device 1, the exhaust gas flows in the direction shown by an arrow D in Fig. 3.

The catalyst device 1 is constituted by an assembly unit 15 constituted by containing the catalyst carrier 10 and the holding mat 12 in the outer cylinder 13. Here, the lengths in the axial direction of the outer cylinder 13 and the catalyst carrier 10 are substantially the same, while the length of the holding mat 12 in the axial direction is formed shorter than the lengths of the outer cylinder 13 and the catalyst carrier 10.

Then, the assembly unit 15 is assembled in a state that the positions of the both ends of the outer cylinder 13 and the both ends of the catalyst carrier 10 substantially match each other. On the other hand, the holding mat 12 is assembled so that an upstream end portion 12C of the holding mat 12 located on the upstream side of the exhaust and a downstream end portion 12D of the holding mat 12 located on the downstream side are located inside the outer cylinder 13 than the both ends of the outer cylinder 13. Therefore, one end of the outer cylinder 13 located on the downstream side with respect to the flow of the exhaust constitutes an extended portion 16 formed so as to extend farther than the downstream end portion 12D of the holding mat 12. Also, the other end of the outer cylinder 13 is extended so that the other end of the outer cylinder 13 is extended from the upstream end portion 12C.

In the catalyst device 1, a high friction portion 14 with high surface roughness and high friction coefficient is disposed on the inner face of an extended portion 16 in the vicinity of the downstream end portion 12D. The high friction portion 14 is formed by making the same catalyst as the catalyst carried inside the catalyst carrier 10 adhere to the outer-cylinder inner face 13A. The high friction portion 14 has high surface roughness and high friction coefficient since the adhering catalyst forms fine projections and recesses on the surface thereof.

The holding mat 12 wrapped around the catalyst carrier 10 and cylindrically contained in the outer cylinder 13 has an outer face 12A, which is an outer circumferential face thereof, in contact with the outer-cylinder inner face 13A, which is an inner circumferential face of the outer cylinder 13 and has an inner face 12B, which is an inner circumferential face thereof, in contact with the outer circumferential face of the catalyst carrier 10.

Since the holding mat 12 is in the compressed state, a force to compress the outer cylinder 13 from the side of the outer-cylinder inner face 13A and a force to compress the catalyst carrier 10 are exerted by a reaction force of compression. Then, the holding mat 12 has the outer face 12A compress the outer cylinder 13 from the side of the outer-cylinder inner face 13A and is fixed to the outer cylinder 13 by friction generated between the outer face 12A and the outer-cylinder inner face 13A.

Also, the holding mat 12 compresses the outer circumferential face of the catalyst carrier 10 and fixes the catalyst carrier 10 by friction generated between the inner face 12B and the outer circumferential face of the catalyst carrier 10.

In the catalyst device 1, the exhaust gas having advanced into the outer cylinder 13 passes through each fine pore 5 of the catalyst carrier 10 and is purified and then, goes out of the outer cylinder 13. Here, since fibers are gathered at a high density in the holding mat 12, the mat has a function as a seal material of the exhaust gas in addition to the function as a holding member of the catalyst carrier 10, and thus, the exhaust gas cannot pass through the holding mat 12. Therefore, since all the exhaust gas passes through the catalyst device 1, purification efficiency is high.

In this first embodiment, as shown in Fig. 3, the high friction portion 14 is disposed on the extended portion 16 in the vicinity of the downstream end portion 12D in the outer-cylinder inner face 13A. As a result, if the holding mat 12 is to be displaced to the downstream side of the exhaust, the holding mat 12 can be fixed to the outer-cylinder inner face 13A by friction with the high friction portion 14.

If the exhaust gas flows through the exhaust pipe 110, the holding mat 12 is subjected to the force to be displaced to the downstream of the exhaust by a pressure of the exhaust gas and the like. However, even if the holding mat 12 in a state compressed inside the catalyst device 1 is displaced to the downstream side by a slight distance, the mat is caught by the high friction portion 14 formed on the inner face of the extended portion 16 in the vicinity of the downstream end portion 12D. At this time, since high friction can be gained between the outer face 12A of the holding mat 12 in the vicinity of the downstream end portion 12D and the high friction portion 14, the holding mat 12 can be fixed to the outer cylinder 13. Thus , the catalyst carrier 10 can be fixed to the outer cylinder 13 by the friction between the holding mat 12 and the outer cylinder 13.

Also, in the first embodiment, since the holding mat 12 and the catalyst carrier 10 can be easily fixed to the outer cylinder 13 without using a stopper member or the like and the catalyst device 1 can be formed in a compact style, the catalyst device 1 can be easily installed in the exhaust muffler 100 or other portions in the exhaust pipe in a motor cycle that tends to have a limited space, for example. Moreover, since the holding mat 12 and the catalyst carrier 10 are fixed to the outer cylinder 13 by increasing the friction by raising the surface roughness of the outer-cylinder inner face 13A, there is no component exposed to the outside. Therefore, if the catalyst device 1 is attached to a motor cycle, for example, it has an advantage that appearance is not spoiled. Also, since a stopper member or the like is not arranged in an exhaust path of the catalyst device 1, the exhaust flow is not obstructed by the stopper member or the like or purification efficiency of the exhaust gas is not deteriorated. Also, since the friction coefficient of the high friction portion 14 is high, even though the reaction force of compression generated when the holding mat 12 is compressed is not managed strictly, sufficient friction can be obtained. Thus, since a tolerance for the strength of the catalyst carrier 10, the density of the holding mat 12, and the inner diameter of the outer cylinder 13 and the like can be set wider, yield of each component is improved, and a manufacturing cost can be reduced.

As having been described above, according to the first embodiment to which the present invention is applied, since the high friction portion 14 that prevents movement between the holding mat 12 and the outer cylinder 13 is disposed between the catalyst carrier 10 and the outer cylinder 13, the catalyst carrier 10 can be fixed to the outer cylinder 13 by friction with the high friction portion 14. Thus, the catalyst carrier 10 can be fixed to the outer cylinder 13 with a simple structure.

Also, in the outer-cylinder inner face 13A, since the high friction portion 14 is disposed in the vicinity of the downstream end portion 12D of the holding mat 12, the holding mat 12 is fixed to the outer-cylinder inner face 13A by friction with the high friction portion 14. Thus, the catalyst carrier 10 can be fixed to the outer cylinder 13 by friction between the holding mat 12 and the outer cylinder 13, and the catalyst carrier 10 can be fixed to the outer cylinder 13 with a simple structure.

Also, if the holding mat 12 is to be displaced to the downstream side of the exhaust, the holding mat 12 is brought into contact with the high friction portion 14 disposed on the inner face of the extended portion 16 on the downstream side of the exhaust and fixed by friction with the high friction portion 14. Thus, the catalyst carrier 10 can be fixed to the outer cylinder 13 by friction between the holding mat 12 and the outer cylinder 13, and the catalyst carrier 10 can be fixed to the outer cylinder 13 with a simple structure.

Moreover, since the high friction portion 14 is a portion with increased surface roughness by making the same catalyst as the catalyst carrier 10 adhere to the outer-cylinder inner face 13A, it can be formed easily.

Also, since the catalyst carrier 10 is formed by ceramics, the catalyst carrier 10 can be easily made light-weighted.

### [Second Embodiment]

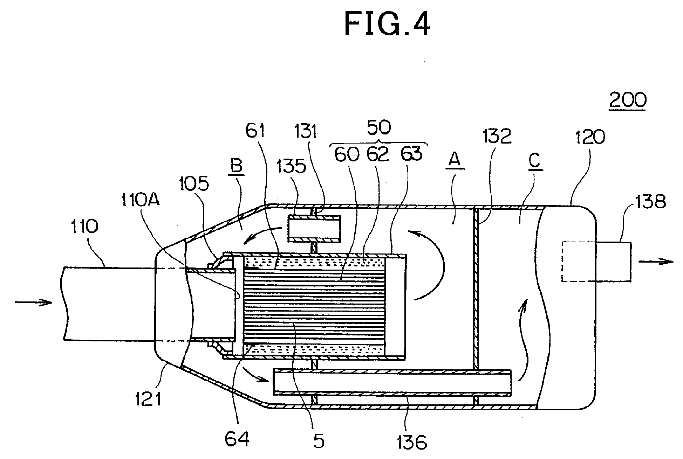

A second embodiment to which the present invention is applied will be described below referring to Figs. 4 to 6.

In this second embodiment, portions configured similarly to the first embodiment are given the same reference numerals and the description will be omitted.

Fig. 4 is a diagram schematically showing an exhaust muffler 200 provided with a catalyst device 50 according to the second embodiment of the present invention.

In the second embodiment, instead of the catalyst carrier 10 in the first embodiment, a catalyst carrier 60 is disposed inside the exhaust muffler 200. The second embodiment is different from the first embodiment in a point that a high friction portion 64 that fixes the catalyst carrier 60 is formed on the surface of the catalyst carrier 60.

As shown in Fig. 4, the exhaust muffler 200 has a cylindrical main body 120 to which the single exhaust pipe 110 extending from an engine is connected, and the catalyst device 50 provided with the catalyst carrier 60 made of ceramics is supported in the cylindrical main body 120. The catalyst device 50 includes the catalyst carrier 60 that carries a catalyst, an outer cylinder 63 that contains the catalyst carrier 60, and a holding mat 62 disposed between the catalyst carrier 60 and the outer cylinder 63. And the catalyst device 50 includes the catalyst carrier 60 around which the holding mat 62 is wrapped contained in the outer cylinder 63.

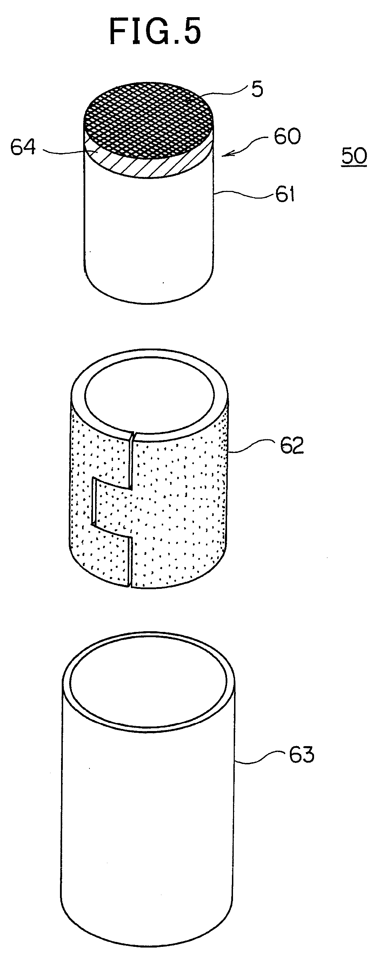

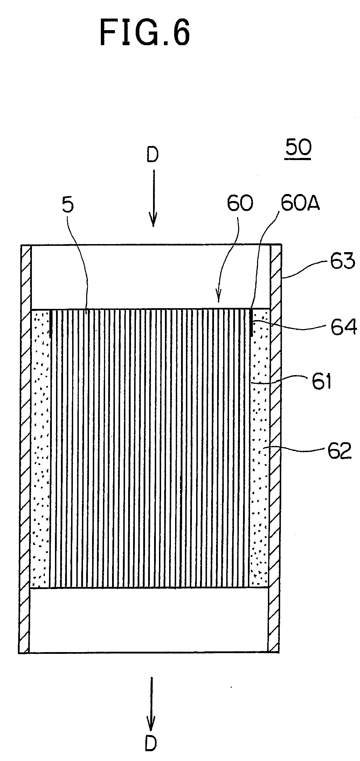

Fig. 5 is an exploded perspective view illustrating a configuration of the catalyst device 50. Fig. 6 is a sectional view of the catalyst device 50.

The catalyst carrier 60 is a honeycomb-state porous structure body formed into a cylindrical shape and having a large number of fine pores 5 extending along the axial direction inside an outer shell of the cylindrical shape and an internal surface area is formed large. Here, a sectional shape of the catalyst carrier 60 is arbitrary, and the sectional shape is not limited to circular but may be an oval, for example.

On a wall of each fine pore 5, platinum, rhodium, and palladium that decompose an exhaust gas component are carried as catalysts. Also, on a part of an outer surface 61, which is the surface of an outer circumference of the catalyst carrier 60, the high friction portion 64 to which the same catalyst as the catalyst adhering to the inside of the catalyst carrier 60 adheres is formed.

Methods to contain the catalyst carrier 60 around which the holding mat 62 is wrapped in the outer cylinder 63 include press-fitting, canning, winding and tightening and the like, and with any of these methods, the holding mat 62 is sandwiched between the outer cylinder 63 and the catalyst carrier 60 and is contained in the compressed state.

The lengths in the axial direction of the catalyst carrier 60 and the holding mat 62 are substantially equal, and in a state in which the catalyst device 50 is assembled, the both ends of the catalyst carrier 60 and the holding mat 62 match each other. Also, the length of the outer cylinder 63 is longer than the lengths of the catalyst carrier 60 and the holding mat 62 and the both ends of the catalyst carrier 60 and the holding mat 62 are located inside the outer cylinder 63.

Since the holding mat 62 is in the compressed state, a force to compress the catalyst carrier 60 and a force to compress the outer cylinder 63 from the inner circumferential side of the outer-cylinder 63 are exerted by a reaction force of compression. Then, the catalyst carrier 60 receives the compression force by the holding mat 62 on the whole surface of an outer surface 61 and is fixed to the holding mat 62 by friction generated between the catalyst carrier 60 and the holding mat 62. Also, the holding mat 62 exerts the compression force on the inner circumferential face of the outer cylinder 63 and is fixed to the outer cylinder 63 by friction generated between the outer cylinder 63 and the holding mat 62.

In the catalyst device 50, the exhaust gas flows in a direction indicated by the arrow D in Fig. 6, and the exhaust gas having advanced into the outer cylinder 63 passes through each fine pore 5 of the catalyst carrier 60 and is purified and then, goes out of the outer cylinder 63. Here, in the holding mat 62, since fibers are gathered at a high density so as to also function as a seal material of the exhaust gas in addition to the function as a protective member of the catalyst carrier 60, the exhaust gas cannot pass through the holding mat 62. Thus, since the exhaust gas passes only through each fine pore 5, the purification efficiency is high.

In the second embodiment, as shown in Figs. 5 and 6, the high friction portion 64 with increased friction coefficient is disposed at least at a part of the outer surface 61 of the catalyst carrier 60. In detail, the high friction portion 64 is formed on an upstream end portion 60A, which is an end on the upstream side of the flow of the exhaust in the catalyst carrier 60.

As a result, the catalyst carrier 60 can be fixed to the holding mat 62 by friction with the high friction portion 64.

Inside the catalyst device 50, the catalyst carrier 60 is subjected to the compression force by the holding mat 62 in the compressed state. Then, the high friction portion 64 is formed on the catalyst carrier 60, and if it is subjected to the compression force, large friction can be obtained between the high friction portion 64 with high friction coefficient and the holding mat 62. Also, since the high friction portion 64 is formed at the end on the upstream side in the flow of the exhaust in the catalyst carrier 60, if the catalyst carrier 60 is to be displaced to the downstream side, for example, the high friction portion 64 is displaced while generating friction over the entire length of the holding mat 62. Thus, a high effect to prevent displacement of the catalyst carrier 60 can be obtained.

As mentioned above, since the catalyst carrier 60 is fixed to the holding mat 62 by friction between the high friction portion 64 and the holding mat 62, the catalyst carrier is not displaced from the holding mat 62 even if it is subjected to the pressure by the exhaust gas from the exhaust pipe 110. Here, the high friction portion 64 is formed over the range where friction that can reliably fix the catalyst carrier 60 to the holding mat 62 can be obtained.

Also, in the second embodiment, since the catalyst carrier 60 can be easily fixed to the holding mat 62 without using a stopper or the like and the catalyst device 50 can be constituted in a compact style, the catalyst device 50 can be easily installed in the exhaust muffler 200 or other portions in the exhaust pipe in a motor cycle that tends to have a limited space, for example. Moreover, since the catalyst carrier 60 is fixed to the holding mat 62 by increasing the friction by raising the surface roughness of the catalyst carrier 60, there is no component exposed to the outside. Therefore, if the catalyst device 50 is attached to a motor cycle, for example, it has an advantage that appearance is not spoiled. Also, since a stopper member or the like is not arranged in an exhaust path of the catalyst device 50, the exhaust flow is not obstructed by the stopper member or the like or purification efficiency of the exhaust gas is not deteriorated. Also, since the friction coefficient of the high friction portion 64 is high, even though the reaction force of compression generated when the holding mat 62 is compressed is not managed strictly, sufficient friction can be obtained. Thus, since a dimensional tolerance for the strength of components constituting the catalyst carrier 50 can be set larger, yield of each component is improved, and a manufacturing cost can be reduced.

As having been described above, according to the second embodiment to which the present invention is applied, since the high friction portion 64 that prevents movement between the holding mat 62 and the outer cylinder 63 is disposed between the catalyst carrier 60 and the outer cylinder 63, the catalyst carrier 60 is fixed to the outer cylinder 63 by friction with the high friction portion 64. Thus, the catalyst carrier 60 can be fixed to the outer cylinder 63 with a simple structure.

Also, since the high friction portion 64 with high friction coefficient is formed at a part of the outer surface 61 of the catalyst carrier 60, the catalyst carrier 60 is fixed to the outer cylinder 63 by friction between the high friction portion 64 and the holding mat 62. Thus, the catalyst carrier 60 can be fixed to the outer cylinder 63 by friction between the catalyst carrier 60 and the holding mat 62, and the catalyst carrier 60 can be fixed to the outer cylinder 63 with a simple structure.

Also, since the high friction portion 64 is a portion with increased surface roughness by making the same catalyst as the catalyst carrier 60 adhere to the outer surface 61, it can be formed easily. Moreover, since only an amount of catalyst required for fixation of the catalyst carrier 60 is used by making the catalyst adhere to a part of the outer surface 61, the catalyst can be saved.

Moreover, since the catalyst carrier 60 is formed by ceramics, the catalyst carrier 60 can be easily made light-weighted.

### [Third Embodiment]

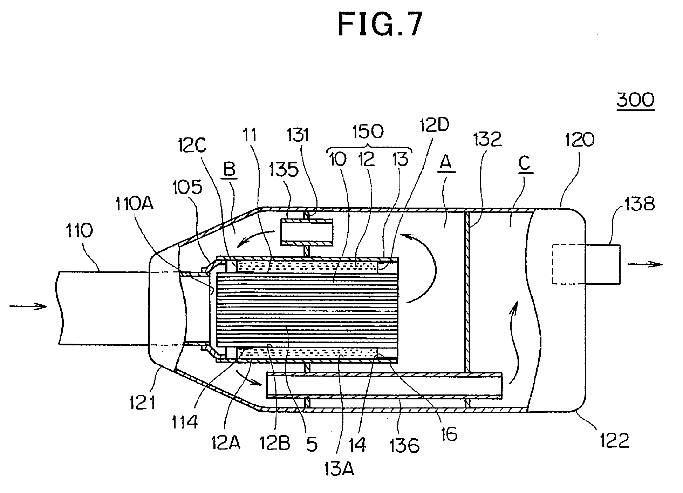

A third embodiment to which the present invention is applied will be described below referring to Figs. 7 to 9. In this third embodiment, portions configured similarly to the first embodiment are given the same reference numerals and the description will be omitted.

Fig. 7 is a diagram schematically showing an exhaust muffler 300 with a catalyst device 150 according to the third embodiment of the present invention.

In the first embodiment, the high friction portion 14 is formed at the downstream end portion 12D of the outer-cylinder inner face 13A, but the third embodiment is different from the first embodiment in a point that, in addition to the high friction portion 14, a high friction portion 114 is formed on an outer surface 11, which is an outer circumferential face of the catalyst carrier 10 of the first embodiment.

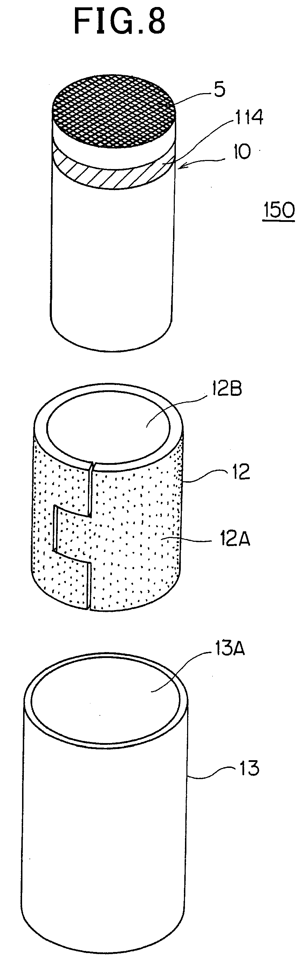

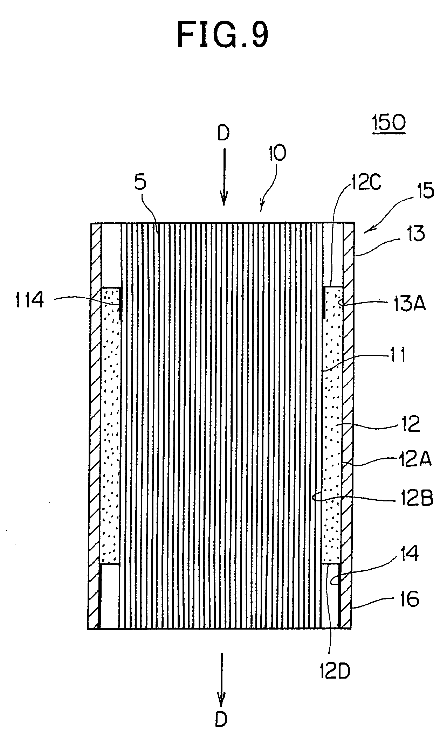

Fig. 8 is an exploded perspective view illustrating a configuration of the catalyst device 150. Fig. 9 is a sectional view of the catalyst device 150.

In the catalyst device 150, the high friction portion 14 is formed on the downstream end portion 12D of the outer-cylinder inner face 13A. Moreover, in the catalyst device 150, in the vicinity of the upstream end portion 12C of the holding mat 12, the high friction portion 114 is formed at a portion where the holding mat 12 is in contact with the outer surface 11 of the catalyst carrier 10. And the high friction portion 114 and the high friction portion 14 are formed by making the same catalyst as the catalyst adhering to the inside of the catalyst carrier 10 adhere.

As having been described above, according to the third embodiment to which the present invention is applied, since the high friction portion 14 is disposed in the vicinity of the downstream end portion 12D of the holding mat 12 in the outer-cylinder inner face 13A, the holding mat 12 is fixed to the outer-cylinder inner face 13A by friction with the high friction portion 14. Moreover, since the high friction portion 114 with high friction coefficient is formed at a part of the outer surface 11 of the catalyst carrier 10, the catalyst carrier 10 is fixed to the outer cylinder 13 by friction between the high friction portion 14 and the holding mat 12. That is, since the catalyst carrier 10 is fixed to the outer cylinder 13 by friction between the outer cylinder 13 and the holding mat 12 as well as the friction between the catalyst carrier 10 and the holding mat 12, the catalyst carrier 10 can be fixed to the outer cylinder 13 with a simple structure.

### [Fourth Embodiment]

An example of a manufacturing method of the catalyst device 1 shown in Fig. 3 will be described below.

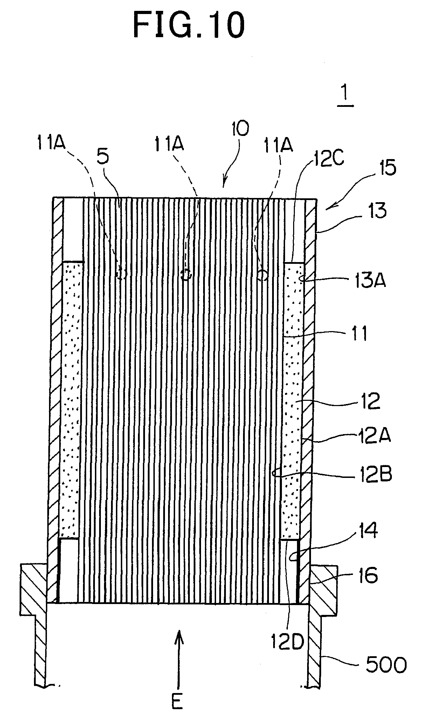

Fig. 10 is a diagram schematically showing a manufacturing method of the catalyst device 1.

In this method, a solution in which catalyst is dissolved is supplied from the lower side of the catalyst device 1 so as to make the catalyst adhere to the catalyst device 1.

The catalyst device 1 is manufactured by the manufacturing method including the following three processes.

A first process is a process of forming the assembly unit 15 by containing the catalyst carrier 10 and the holding mat 12 in the outer cylinder 13. Specifically, first, the holding mat 12 is wrapped around the outer circumferential face of the cylindrical catalyst carrier 10. Then, the catalyst carrier 10 is pressed into the outer cylinder 13 along with the holding mat 12 so as to form the assembly unit 15.

A second process is a process of making a catalyst adhere to the inside of the catalyst carrier 10 contained in the assembly unit 15 and a part of the outer-cylinder inner face 13A. Specifically, first, as shown in Fig. 10, the assembly unit 15 is connected to a cylindrical body 500, and a catalyst solution adjusted so as to contain platinum, rhodium, and palladium is press-fed as shown by an arrow E through the cylindrical body 500 and adjusted so that the catalyst solution reaches the upper end of the catalyst carrier 10 in Fig. 10. Then, the catalyst solution adheres to each fine pore 5 inside the catalyst carrier 10 and the vicinity of the downstream end portion 12D in the outer-cylinder inner face 13A.

A third process is a process of sintering the assembly unit 15. As a specific example, the assembly unit 15 is removed from the cylindrical body 500 and dried by hot air at 100 °C for 10 minutes and then, sintered at 450 °C for 1 hour, for example. As a result, the catalyst is carried on the inner face of the downstream end portion 12D and the extended portion 16 and the surface of each fine pore 5, and the catalyst device 1 is completed. Then, the high friction portion 14 formed by making the catalyst adhere to the inner face of the extended portion 16 has high surface roughness and high friction coefficient since the adhering catalyst forms fine projections and recesses on the surface thereof. Also, by sintering at 450 °C, since the holding mat 12 is fastened to the outer-cylinder inner face 13A, an effect to fix the holding mat 12 to the outer cylinder 13 can be obtained.

Also, by the method of a fourth embodiment, the catalyst device 150 shown in Fig. 9 can also be manufactured.

In order to manufacture the catalyst device 150 shown in Fig. 9, as shown in Fig. 10, a plurality of through holes 11A are formed in a portion in the vicinity of the upstream end portion 12C in the outer surface 11 of the catalyst carrier 10. The through holes 11A are holes penetrating to the inside of the catalyst carrier 10, and the solution press-fed and passing through the inside of the catalyst carrier 10 exudes from the through holes 11A. As a result, on the outer surface 11 of the catalyst carrier 10, the high fiction portion 114 can be formed in the portion in the vicinity of the upstream end portion 12C shown in Fig. 9 by making the solution adhere thereto. Also, since the through holes 11A can be arranged at desired positions, the high friction portion 114 can be formed at desired positions.

The catalyst solution to make the catalyst carrier 10 carry palladium, rhodium, and platinum is made by dissolving a compound containing these metals in a predetermined solvent. Materials used for making the palladium carried include nitrate salt, chloride, acetate salt, complex salt (dichlorotetraammine palladium or the like) and the like. Also, materials used for making platinum carried include nitrate salt, chloride, acetate salt, complex salt (dinitrodiammine platinum, trichlorotriammine platinum or the like) or the like. Also, materials for making rhodium carried by the catalyst carrier 10 include nitrate salt, chloride, acetate salt, sulfate, complex salt (pentaamminechlororhodium, hexaamminerhodium or the like) or the like. By adjusting a solution of these materials and by impregnating the above-described catalyst carrier 10 with this solution, the catalyst carrier 10 can be made to carry palladium, platinum, and rhodium. As the solvent, water or organic solvents can be used, but water is preferable in view of solubility, easiness of treatment of waste solution, availability and the like. Also, after the catalyst carrier 10 is impregnated with the solution, by heating and drying the catalyst carrier 10 to approximately 250 °C, for example, palladium, rhodium, and platinum are carried by the porous structure of the catalyst carrier 10, and nitrogen oxides, HC (hydrocarbon), CO (carbon monoxide) and the like in the exhaust gas can be decomposed and purified. Depending on the required exhaust gas purification performances, the catalyst may be constituted by making only any one or two types of palladium, rhodium, and platinum carried by the catalyst carrier 10. Alternatively, other than palladium, rhodium, and platinum, a metal or a metal compound and the like functioning as a catalyst (iridium, cerium, zirconium, titanium or their oxides and the like) may be carried by the catalyst carrier 10.

As having been described above, according to the fourth embodiment to which the present invention is applied, after the assembly unit 15 is formed in the first process, since the catalyst can be made to adhere to the outer-cylinder inner face 13A at the same time as adhesion of the catalyst to the catalyst carrier 10 in the second process, a process only to make the catalyst adhere to the outer-cylinder inner face 13A is not required, and manufacturing efficiency is good and the catalyst device 1 can be manufactured easily. Moreover, by sintering in the third process, the catalyst can be made to firmly adhere and at the same time, the holding mat 12 can be made to be fastened to the outer-cylinder inner face 13A by heating so that the holding mat 12 can be fixed to the outer cylinder 13. Thus, a process only to fasten the holding mat 12 by heating is not required, and manufacturing efficiency is good and the catalyst device 1 can be manufactured easily. Also, since the catalyst carrier 10 and the holding mat 12 can be pressed into the outer cylinder 13 in a state in which the catalyst does not adhere to the outer-cylinder inner face 13A in the first process, friction resistance in press-fit is small, and press-fit can be performed easily.

### [Fifth Embodiment]

An example of a manufacturing method of the catalyst carrier 60 shown in Fig. 6 will be described below.

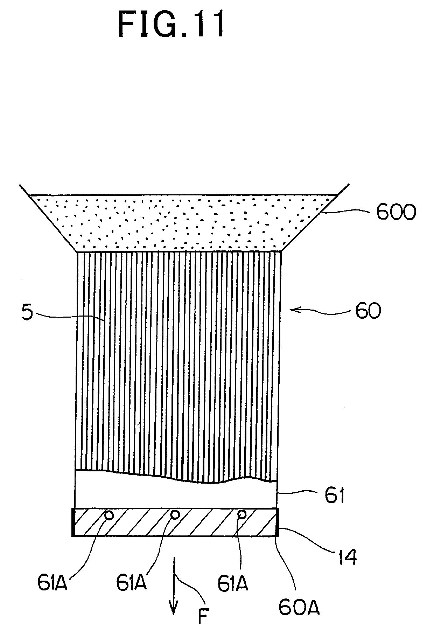

Fig. 11 is a diagram schematically illustrating a method of making the catalyst adhere to the catalyst carrier 60.

In this method, a catalyst solution is supplied from above the catalyst carrier 60 so that the catalyst is made to adhere to the catalyst carrier 60.

First, the catalyst carrier 60 is arranged so that the upstream end portion 60A is directed downward, and a hopper 600 is disposed so as to be in contact with the upper end of the catalyst carrier 60 in Fig. 11. To the hopper 600, the catalyst solution is supplied, and the catalyst solution flowing through the catalyst carrier 60 through the hopper 600 flows through the inside of the catalyst carrier 60 as shown by an arrow F, and the catalyst solution adheres to each fine pore 5 inside the catalyst carrier 60.

Then, in the outer surface 61 of the catalyst carrier 60, in the vicinity of the upstream end portion 60A, a plurality of through holes 61A are formed. The through holes 61A are holes communicating with the inside of the catalyst carrier 60, and the catalyst solution flowing inside the catalyst carrier 60 exudes from the through holes 61A. As a result, on the outer surface 61 of the catalyst carrier 60, the high friction portion 14 can be formed by making the catalyst solution adhere to a portion in the vicinity of the upstream end portion 60A.

As mentioned above, by forming the through holes 61A in the outer surface 61 of the catalyst carrier 60, the high friction portion 14 can be easily formed at a desired position.

As having been described above, according to the fifth embodiment to which the present invention is applied, since the high friction portion 64 is formed by making the catalyst adhere to the outer surface 61 at the same time in the process in which the catalyst is made to be carried inside the catalyst carrier 60, the high friction portion 64 can be easily formed.

### [Sixth Embodiment]

Another example of a manufacturing method of the catalyst carrier 60 shown in Fig. 6 will be described below.

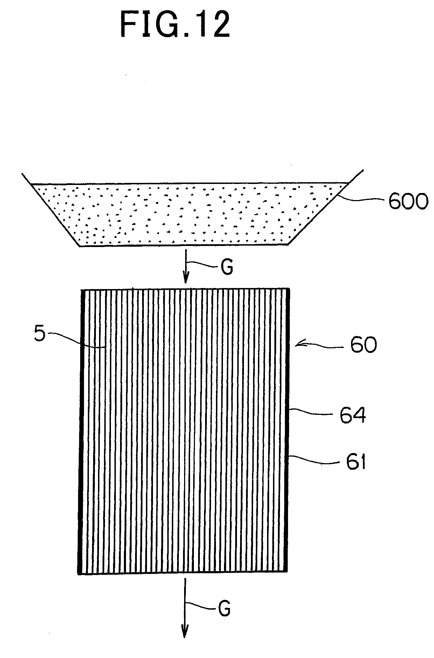

Fig. 12 is a diagram schematically illustrating a method of making the catalyst adhere to the catalyst carrier 60.

In this method, the catalyst solution is supplied from above the catalyst carrier 60 so that the catalyst is made to adhere to the catalyst carrier 60.

In the catalyst carrier 60, at the upper end in Fig. 12, the hopper 600 is disposed with a space provided. To the hopper 600, the catalyst solution is supplied, and the catalyst solution flowing down from the hopper 600 flows as shown by an arrow G inside the catalyst carrier 60 and also flows to the outer surface 61 from the upper face of the catalyst carrier 60 and flows down along the outer surface 61. Thus, the catalyst solution adheres to the most part of each fine pore 5 inside the catalyst carrier 60 and the outer surface 61, and the high friction portion 64 can be easily formed over the most part of the outer surface 61.

Each of the above-described embodiments shows an aspect to which the present invention is applied and the present invention is not limited to the above embodiments.

For example, in the first embodiment, the high friction portion 14 is explained as being disposed on the inner face of the extended portion 16 in the vicinity of the downstream end portion 12D, but the present invention is not limited to that, and the high friction portion 14 may be disposed in a region including at least either one of a portion in contact with the downstream end portion 12D or its vicinity. For example, the high friction portion 14 may be formed on a contact face between the outer face 12A of the holding mat 12 and the outer-cylinder inner face 13A. Moreover, the high friction portion 14 may be disposed on the outer-cylinder inner face 13A closer to the upstream side of the exhaust than the upstream end portion 12C. In this case, displacement of the holding mat 12 to the upstream side of the exhaust can be prevented.

Similarly, in the second embodiment, the high friction portion 64 is explained as being disposed on the upstream end portion 60A on the outer surface 61 of the catalyst carrier 60, but it is only necessary that the high friction portion 64 is disposed at least at a part of the outer surface 61 or the high friction portion 64 may be disposed over the whole surface of the outer surface 61. Also, the portion where the high friction portion 64 is disposed is not limited to the upstream end portion 60A and the high friction portion 64 may be disposed at the center part on the outer surface 61, for example. Moreover, in the second embodiment, the high friction portion 64 on the outer surface 61 is explained as being formed by making the catalyst adhere, but the high friction portion 64 may be formed by forming a face with high surface roughness such as pearskin finish or the like on the outer surface 61 of the catalyst carrier 60 for which working before sintering is easy when the catalyst carrier 60 made of ceramics is sintered and then, by sintering the catalyst carrier 60, for example. Alternatively, the surface roughness of the outer surface 61 may be made rough by mechanical working or the like.

Also, in the third embodiment, the high friction portion 114 is explained as being formed on a portion where the holding mat 12 and the outer surface 11 of the catalyst carrier 10 are in contact in the vicinity of the upstream end portion 12C of the holding mat 12, but the present invention is not limited to that. For example, the high friction portion may also be disposed on a portion where the catalyst carrier 10 is not in contact with the holding mat 12 in the vicinity of the upstream end portion 12C. It is needless to say that other detailed configurations can be arbitrarily changed.

Also, in the fourth embodiment, the high friction portion 14 is explained as being formed after the assembly unit 15 is formed, but it may also be so configured that the high friction portion 14 is formed in advance on the outer-cylinder inner face 13A and then, the catalyst carrier 10 and the holding mat 12 are contained in the outer cylinder 13 by canning, winding and tightening or the like. Also, it may be so configured that the high friction portion 14 is formed in advance on the inner face of the extended portion 16 of the outer-cylinder inner face 13A and then, the catalyst carrier 10 and the holding mat 12 are pressed into the outer cylinder 13. In this case, the holding mat 12 and the catalyst carrier 10 can be easily pressed in from the end of the outer cylinder 13 on the side opposite to the side of the high friction portion 14. It is needless to say that other detailed configurations can be arbitrarily changed. Also, in the fourth embodiment, it is explained that the cylindrical body 500 is connected to the assembly unit 15 and the catalyst solution is press-fed from below, but it may also be so configured that the lower end of the assembly unit 15 is impregnated with the catalyst solution, for example, and the catalyst solution is pumped up from the upper end so as to make the catalyst solution adhere.

Also, in the first embodiment, the high friction portion 14 of the outer cylinder 13 is explained as being formed by making the catalyst adhere but the high friction portion 14 may also be formed by making another substance that increases friction adhere, and porous ceramics may be made to adhere, for example. Also, the high friction portion 14 may be formed by making the surface roughness rough by mechanical working or the like.

Also, the catalyst carrier 10 of the first embodiment and the catalyst carrier 60 of the second embodiment are explained as being made of ceramics but it may be so configured that the catalyst carrier 10 is formed by a metal, for example, and a porous ceramic layer with high surface roughness is formed on a part of the outer surface 61 of the metal catalyst carrier 10 and each fine pore 5 by sintering or the like and a catalyst is carried by this ceramic layer. In this case, since the surface roughness of the outer surface 61 is made rough only by forming the ceramic layer, the function as the high friction portion 64 can be given to this ceramic layer. Also, preferable examples of the material for the catalyst carriers 10 and 60 if the catalyst carriers 10 and 60 are formed by metal include stainless, iron-aluminum-chromium alloy or the like.

Moreover, the fifth embodiment shows an aspect to which the present invention is applied, and the present invention is not limited to the fifth embodiment.

For example, in the fifth embodiment, the catalyst solution is explained to be made to flow to the catalyst carrier 60 from the hopper 600, but the present invention is not limited to that, and it may be so configured that the end on the side of the upstream end portion 60A of the catalyst carrier 60 is impregnated with the catalyst solution, and the catalyst solution is pumped up from the end on the side opposite to the upstream end portion 60A so as to make the catalyst solution adhere. In this case, the through holes 61A do not have to be provided.

Other than the above, it is needless to say that the specific configuration in each of the first to sixth embodiments can be arbitrarily changed.

### [Seventh Embodiment]

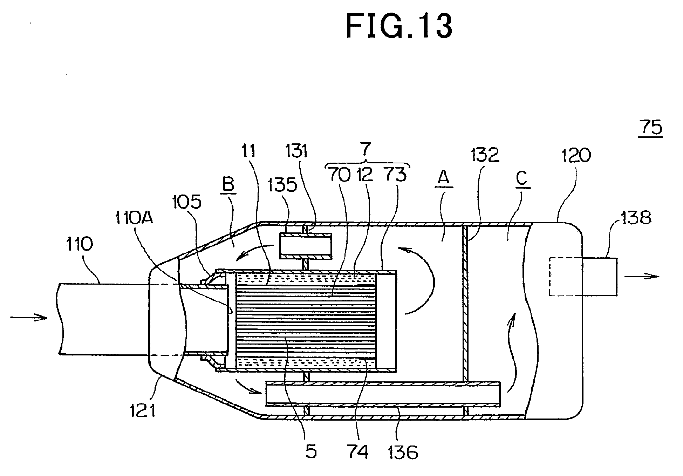

Fig. 13 is a diagram schematically illustrating an exhaust muffler 75 provided with a catalyst device 7 according to a seventh embodiment to which the present invention is applied. The exhaust muffler 75 is, similarly to the exhaust muffler 100 shown in Fig. 1, disposed on a motor cycle and functions as a silencer that decompresses a high-temperature/high-pressure exhaust gas having passed through the exhaust pipe 110 and exhausts it to the outside.

The exhaust muffler 75 has the cylindrical main body 120 to which the exhaust pipe 110 is connected, and the catalyst device 7 provided with the catalyst carrier 10 is supported in the cylindrical main body 120. The catalyst device 7 has an outer cylinder 73 instead of the outer cylinder 13 of the catalyst device 1 (Fig. 1), and the other components are common with those of the catalyst device 1. The catalyst device 7 penetrates and is fixed to the first bulkhead 131 closest to the end portion 110A of the exhaust pipe 110, similarly to the catalyst device 1. Also, the exhaust muffler 75 is constituted similarly to the exhaust muffler 100 except for the point that the catalyst device 7 is provided instead of the catalyst device 1.

In this seventh embodiment, portions configured similarly to the first to sixth embodiments are given the same reference numerals and the description will be omitted.

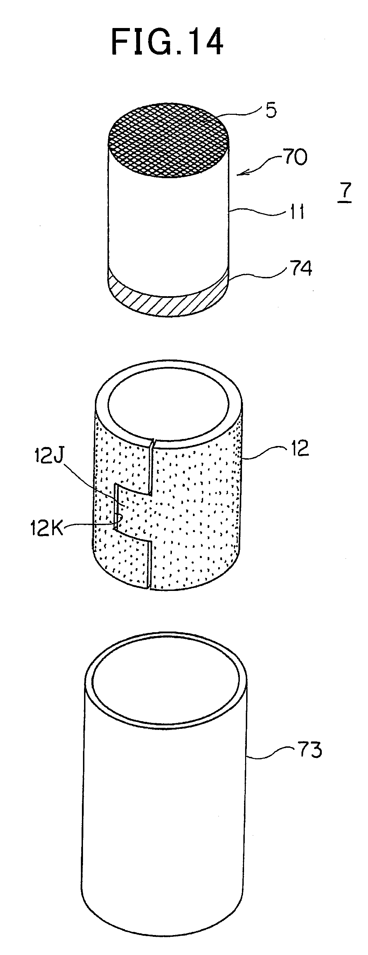

Fig. 14 is an exploded perspective view illustrating a configuration of the catalyst device 7.

The catalyst carrier 10 is a honeycomb-state porous structural body formed cylindrically as mentioned above, and a high friction portion 74 is formed on the outer surface 11.

Also, as the material constituting the outer cylinder 73, a metal with high strength and high heat resistance is used and particularly a metal material that can be oxidized relatively easily such as a general carbon steel (so-called SP material) is used, for example. Particularly, for the material of the outer cylinder 73, a material that is oxidized more easily than the stainless material such as SUS 430 is preferable, and more specifically, a material in which an oxidization reaction progresses under a condition in which a passive state film of the stainless material is not oxidized/deteriorated is preferable. That is, a material oxidized at a temperature lower than the temperature at which the passive state film of the stainless material is oxidized/deteriorated or a material in which oxidization progresses under an atmosphere of an oxidant gas in which the passive state film of the stainless material can withstand is preferable.

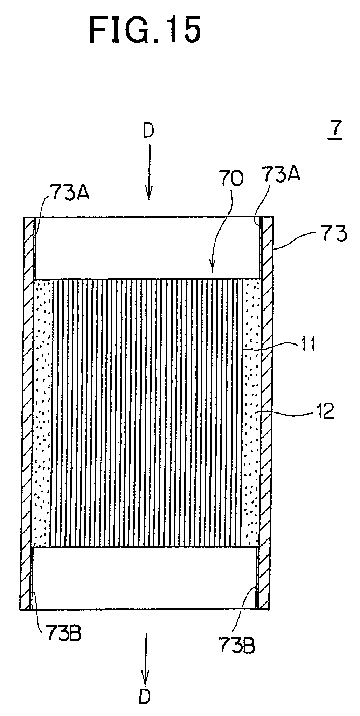

Fig. 15 is a sectional view of the catalyst device 7.

As shown in Fig. 15, the catalyst device 7 is constituted such that the outer surface 11 is held by the outer cylinder 73 through the holding mat 12. In the process of manufacturing the catalyst device 7, in a process of containing the catalyst carrier 10 and the holding mat 12 in the outer cylinder 73, the holding mat 12 is wrapped around the catalyst carrier 10 and then, this is pressed into the outer cylinder 73 formed cylindrically in advance. Therefore, the holding mat 12 contained in the outer cylinder 73 is in the compressed state, and by means of a repulsive force of fibers constituting the holding mat 12, a pressing force acts between the catalyst carrier 10 and the holding mat 12 and between the holding mat 12 and the outer cylinder 73.

Since the catalyst carrier 10 is formed by a porous ceramic material, the surface roughness on the outer surface 11 is high, and the surface of the holding mat 12 is also a rough face. Therefore, the catalyst carrier 10 and the holding mat 12 are held so as not to move with respect to each other by a friction force. Also, the holding mat 12 and the outer cylinder 73 are held by friction.

As mentioned above, the outer cylinder 73 has the surface thereof formed by a material that can be oxidized relatively easily. Thus, the surface of the inside of the outer cylinder 73 is easily oxidized, and a portion not in contact with the holding mat 12 and exposed is particularly easily oxidized. Also, the holding mat 12 is a collection of fibers and does not have air tightness close to perfect, and thus, a portion in contact with the holding mat 12 in the inner face of the outer cylinder 73 is also easily oxidized.

Therefore, if the catalyst device 7 is contained in the exhaust muffler 75 and attached to a motor cycle or an automobile, when the exhaust gas communicates through the inside of the catalyst device 7 upon start of use, the inner face of the outer cylinder 73 is oxidized by an influence of an oxidizing gas contained in the exhaust gas or heat of the exhaust gas.

Then, on the inner face of the outer cylinder 73, oxide layers 73A and 73B are quickly formed after start of use of the catalyst device 7.

The oxide layer 73A is located on the upstream side with respect to a flow of the exhaust gas indicated by the symbol D in Fig. 15 and at a spot where the inner face of the outer cylinder 73 is exposed to an unpurified exhaust gas. The unpurified exhaust gas contains oxidizing gases such as NOx (nitrogen oxides), oxygen or the like, and the inner surface of the outer cylinder 73 is oxidized by these oxidizing gases, whereby the oxide layer 73A is formed.

Also, the downstream side of the catalyst carrier 10 with respect to the flow of the exhaust gas indicated by the symbol D is a spot exposed to the exhaust gas having passed through the catalyst carrier 10 and purified, but the purified exhaust gas also contains the oxidizing gases such as oxygen, so the inner surface of the outer cylinder 73 is oxidized by these oxidizing gases, and the oxide layer 73B is formed.

Moreover, since the inside of the catalyst device 7 reaches a considerably high temperature by heat in the exhaust gas, an oxidization reaction on the inner surface of the outer cylinder 73 is promoted. The temperature inside the catalyst device 7 is different depending on a displacement or a model of the internal combustion engine, a type of the fuel, and a position of the catalyst device 7 in an exhaust path, but the temperature sufficiently reaches such a degree that the oxidization of the material of the above-described outer cylinder 73 quickly progresses.

Therefore, on the inner face of the outer cylinder 73, particularly the exposed portion is quickly oxidized after start of use of the catalyst device 7, whereby the oxide layers 73A and 73B are formed.

Also, on the inner face of the outer cylinder 73, oxidization progresses not only on the oxide layers 73A and 73B but also at a spot covered by the holding mat 12, and the oxide layers 73A and 73B are also formed by expanding to a spot in contact with the holding mat 12.

The oxidization on the inner face of the outer cylinder 73 does not progress under an even condition but is subjected to an influence of an uneven temperature inside the catalyst device 7 and moreover, the type, concentration, a composition ratio of the oxidizing gas contained in the exhaust gas are not constant. Therefore, on the inner face of the outer cylinder 73, an uneven oxidization reaction progresses, and the oxide layers 73A and 73B have surfaces with high surface roughness.

Therefore, the friction coefficient between the holding mat 12 and the oxide layers 73A and 73B is extremely high, and it is not easy to displace the positions of the holding mat 12 and the outer cylinder 73. In other words, the holding mat 12 is firmly held by/fixed to the outer cylinder 73 by friction.

Here, since high friction is generated by the oxide layers 73A and 73B formed on the portion where the end portion of the holding mat 12 is in contact with the outer cylinder 73, the holding mat 12 is held and fixed together with the catalyst carrier 10, but even if the oxide layers 73A and 73B are formed only on the portion not in contact with the holding mat 12, the holding mat 12 can be held and fixed.

For example, when the oxide layer 73B is formed only on the portion not in contact with the holding mat 12, if the holding mat 12 is to be displaced by the pressure of the exhaust gas indicated by the symbol D, the end portion of the holding mat 12 is quickly brought into contact with the oxide layer 73B, whereby strong friction is caused. Thus, the holding mat 12 is held by the friction force at a position substantially hardly displaced.

Therefore, since at least a part on the inner surface of the outer cylinder 73 is oxidized and the oxide layer with high surface roughness is formed, the holding mat 12 is held by and fixed to the outer cylinder 73 with the catalyst carrier 10.

As mentioned above, the holding mat 12 is pressed into the outer cylinder 73, and a reaction force acts against the outer cylinder 73. Thus, in addition to the friction coefficient increased by oxidization of the outer cylinder 73 into the oxide layers 73A and 73B, a force acts between the holding mat 12 and the outer cylinder 73, whereby the friction force between the holding mat 12 and the oxide layers 73A and 73B is further increased. Therefore, the holding mat 12 is firmly held by and reliably fixed to the outer cylinder 73.

Also, the material forming the outer cylinder 73 is, unless it is worked so as to make the surface physically rough, a relatively smooth face before use as the catalyst device 7 is started. Thus, since the surface roughness of the outer cylinder 73 is low and the friction coefficient is low during the process of manufacturing the catalyst device 7, in the process of press-fit of the holding mat 12 and the catalyst carrier 10 into this outer cylinder 73, press-fit can be performed smoothly without trouble.

Then, when the holding mat 12 and the catalyst carrier 10 are contained in the outer cylinder 73 so as to become the catalyst device 7 and its use is started, the inner face of the outer cylinder 73 is quickly oxidized, and the oxide layers 73A and 73B with high surface roughens are formed, whereby the holding mat 12 is held by and fixed to the outer cylinder 73 together with the catalyst carrier 10. Thus, in the catalyst device 7, without a special operation, the holding mat 12 can be fixed to the outer cylinder 73, and displacement between the holding mat 12 and the outer cylinder 73 can be prevented.

As the material of the outer cylinder 73, various materials that satisfy the above-described conditions can be cited, but in view of strength, workability, ease to be oxidized, smoothness on the surface before the use of the catalyst device 7 is started, a weight and the like, among the materials that can be oxidized more easily than stainless, iron materials such as general carbon steels (SP materials), aluminum, aluminum alloys and the like can be cited, for example. It is preferable that these materials do not have a passive state oxidized film or the like formed on the surface. By using such materials, there is an advantage that oxidization quickly progresses even at a low temperature and the oxide layers 73A and 73B are formed, and even if the catalyst device 7 is disposed in an exhaust pipe of an internal combustion engine with small displacement or even if an exhaust temperature does not rise much, the holding mat 12 can be fixed to the outer cylinder 73.

It is not necessary that the entire outer cylinder 73 is formed by a material that can be oxidized as above, but only a portion of the oxide layers 73A and 73B shown in Fig. 15, a portion in contact with the end portion of the holding mat 12 or the vicinity of the end portion of the holding mat 12 may be formed by the above materials. Even in this case, since the oxide layer is formed on a portion in contact with the holding mat 12 or in the vicinity of the end portion of the holding mat 12, the holding mat 12 can be held by and fixed to the outer cylinder 73.

In a motor cycle, the catalyst device might be formed using a metal carrier such as a punching metal or a metal honeycomb worked into a honeycomb shape by bending a metal plate. This metal carrier is different from the case of the ceramic carrier but can be attached to the outer cylinder through a bracket or the like installed upright inside the outer cylinder, for example, without using a mat. Also, the outer cylinder that contains the metal carrier is arranged in a muffler in general similarly to the catalyst device of the seventh embodiment. In this case, a temperature difference between the center and an outer cylinder portion of the metal carrier is small, and a specific temperature difference is approximately 100 to 150°C, for example, and if the center of the carrier is at 900 °C, for example, the temperature of the outer cylinder is 750 to 800°C. Therefore, as the material of the outer cylinder, a stainless material might be used as a material with high oxidation resistance and high-temperature strength.

On the contrary, in the seventh embodiment, since the catalyst device 7 is formed using the catalyst carrier 10 made of ceramics, the holding mat 12 is interposed between the outer cylinder 73 and the catalyst carrier 10. Since this holding mat 12 works as an insulating material, the temperature difference between the outer cylinder 73 and the catalyst carrier 10 is as large as 250 to 500°C, for example, and even if the temperature at the center of the catalyst carrier 10 exceeds 1000°C, the temperature of the outer cylinder 73 is approximately 600°C. Therefore, by interposing the holding mat 12 between the catalyst carrier 10 made of ceramics and the outer cylinder 73, heat of the outer cylinder 73 can be adjusted, and progress of oxidization can be suppressed appropriately. Thus, as the material of the outer cylinder 73, a material other than stainless such as aluminized steel plate or the like can be applied. Therefore, an effect that a manufacturing cost can be kept low can be obtained.

Also, in the seventh embodiment, since the catalyst device 7 is arranged inside the cylindrical main body 120 of the exhaust muffler 75, even if oxidation of the outer cylinder 73 of the catalyst device 7 progresses appropriately, it does not show on the appearance. As a result, by using the catalyst device 7 explained in the seventh embodiment for a small vehicle such as a motor cycle, the exhaust system can be made compact, and it is effective that supporting of the catalyst carrier 10 made of ceramics is reinforced while a low-price material than a stainless material (the above SUS430 or the like) is used.

A manufacturing method of the catalyst device 7 will be described below. The catalyst device 7 can be manufactured by a method explained in the above-described fourth to sixth embodiments similarly to the catalyst device 1. Also, the device can be manufactured by the following methods. Various conditions such as temperature, time and the like in the following explanations only indicate specific examples.

First, a part of one end in the axial direction of the catalyst carrier 10 formed cylindrically is dipped in a solution containing platinum, rhodium, and palladium by a predetermined length (depth). Then, to the other end of the catalyst carrier 10 in a state in which the one end is dipped, a tube connected to a pump that can pump up the solution is connected. This tube is connected to the other end of the catalyst carrier 10 so that suctioning can be performed from all the fine pores 5. Then, by performing suctioning by the pump through the tube, the solution is pumped up from all the fine pores 5, the solution is brought into contact with the surface of each fine pore 5, and the catalyst, which is a solute, adheres to the surface of each fine pore 5. Here, since the catalyst carrier 10 has the one end dipped in the solution by the predetermined length in the process of making the solution adhere to the surface of each fine pore 5, the solution adheres to a part of the outer surface 11 of the catalyst carrier 10 over the predetermined length.

After that, the catalyst carrier 10 is pulled up from the solution and dried by hot air at 100°C for 10 minutes and then, sintered at 450°C for 1 hour and the catalyst carrier 10 is made to carry the catalyst.

After the sintering, by wrapping the holding mat 12 around the outer surface 11 of the catalyst carrier 10 and by pressing the catalyst carrier 10 into the outer cylinder 73 together with the holding mat 12, the catalyst device 7 is formed.

In the above process, the solution in which the catalyst carrier 10 is made to carry palladium, rhodium, and platinum and the material used for this solution are similar to those described in the fourth embodiment.

Also, after the holding mat 12 and the catalyst carrier 10 are pressed into the outer cylinder 73, it is possible to further heat the catalyst device 7 so as to bond the holding mat 12 to the outer cylinder 73. That is, the catalyst device 7 may be heated in a state in which the catalyst carrier 10 is contained together with the holding mat 12 in the outer cylinder 73 so as to form the catalyst device 7. In this case, since the holding mat 12 and the inner face of the outer cylinder 73 are heated in a close contact state, affinity between the inner face of the outer cylinder 73 and the holding mat 12 is further improved and brought into close contact, made to adhere or bonded together to such a degree that a predetermined holding force is exerted.

Then, if an additive material with the same composition as the material forming the holding mat 12 or a composition containing a common element with the material is added to the inner face of the outer cylinder 73, since the affinity between the holding mat 12 and the outer cylinder 73 is high, even if a temperature at heating is not so high, the holding mat 12 and the outer cylinder 73 can be brought into close contact, made to adhere or bonded together strongly.

As a specific example, if the holding mat 12 is formed by compressing or integrating fibers made of alumina (aluminum oxide), which is one type of ceramics, using aluminum or an alloy containing aluminum for the outer cylinder 73 or by forming the outer cylinder 73 by iron, stainless or other metals and then, by applying aluminum plating on the inner face of the outer cylinder 73, the holding mat 12 and the outer cylinder 73 are brought into close contact, made to adhere or bonded together during heating by the affinity between aluminum contained in each even if the heating temperature is low.

As having been described above, according to the seventh embodiment to which the present invention is applied, since the catalyst carrier 10 made of ceramics that carries a catalyst inside, the outer cylinder 73 that contains the catalyst carrier 10, and the holding mat 12 interposed between the outer cylinder 73 and the catalyst carrier 10 are provided and at least at a part of the inner surface of the outer cylinder 73, a material that can be oxidized more easily than a stainless material in the exhaust gas of the internal combustion engine is arranged, the material on the inner face of the outer cylinder 73 is oxidized with use of the catalyst device 7, and the oxide layers 73A and 73B are formed, whereby the surface roughness is increased. Thus, since the friction coefficient is raised at least at a part of the outer cylinder 73, the holding mat 12 and the catalyst carrier 10 can be fixed by friction between the outer cylinder 73 and the holding mat 12.

Also, since oxidization has not progressed much on the inner face of the outer cylinder 73 before start of use as the catalyst device 7, the surface roughness is not high. Thus, in the process of pressing the catalyst carrier 10 together with the holding mat 12 into the outer cylinder 73, the press-fit can be performed smoothly. Then after the use of the catalyst device 7 is started, the material arranged in the outer cylinder 73 is exposed to the exhaust gas and quickly oxidized by an influence of an oxidizing gas in the exhaust gas and / or a high temperature of the exhaust gas, and the oxide layers 73A and 73B are formed, whereby the surface roughness is increased. Therefore, the holding mat 12 and the catalyst carrier 10 can be fixed quickly after the start of use. As mentioned above, according to the configuration of the seventh embodiment, the holding mat 12 and the catalyst carrier 10 can be fixed to the outer cylinder 73 with a simple configuration without incurring trouble in the process of containing the catalyst carrier 10 and the holding mat 12 in the outer cylinder 73.

Moreover, the material that can be easily oxidized arranged at least at a part of the inner face of the outer cylinder 73 is a material in which oxidization progresses at a temperature lower than the temperature at which the stainless material (SUS430 or the like) is oxidized in the exhaust gas of the internal combustion engine. Thus, by arranging the material, in which oxidization progresses at a lower temperature in the exhaust gas, on the inner face of the outer cylinder 73, the material is quickly oxidized and the surface roughness becomes high if being exposed to the exhaust gas and even in an environment where the exhaust gas cannot reach a high temperature easily, the holding mat 12 and the catalyst carrier 10 can be fixed quickly after it is exposed to the exhaust gas. Also, by using a general carbon steel (SP) material as the material disposed on the inner face of the outer cylinder 73, a configuration in which the catalyst carrier 10 and the holding mat 12 can be easily fixed can be easily realized using the carbon steel, which is an inexpensive material with excellent workability.

Then, as the material disposed on the inner face of the outer cylinder 73, by using the material in which an additive material of the same composition as the material forming the holding mat 12 or the composition containing a common element as the material is added so as to have a configuration in which the material is disposed at a position in contact with the holding mat 12 on the inner face of the outer cylinder 73, the affinity between the holding mat 12 and the outer cylinder 73 is improved so that the holding mat 12 and the outer cylinder 73 can be fixed so as not to move with respect to each other. Also, by heating the catalyst device 7 after being formed in this case, the holding mat 12 and the inner face of the outer cylinder 73 can be made to adhere to each other favorably, and the holding mat 12 and the catalyst carrier 10 can be fixed.

Here, a ratio between the length and the diameter of the catalyst device 7 when the catalyst device 7 of the seventh embodiment is fixed in the exhaust muffler 75 as shown in Fig. 13 and attached to a motor cycle will be described.

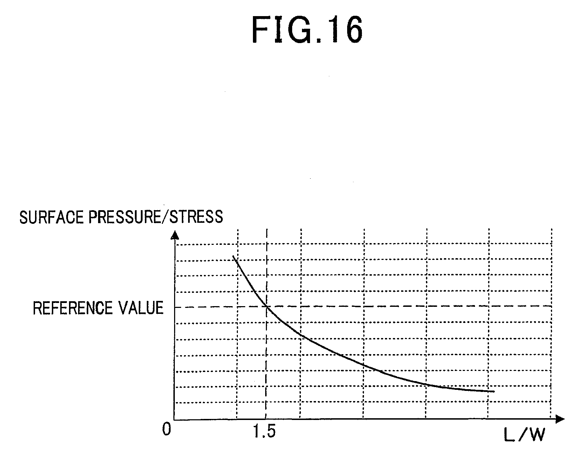

Fig. 16 is a graph showing correlation between a high-temperature resistance and creep strength of the outer cylinder 73 and the shape of the catalyst carrier 10.

In Fig. 16, reference character W denotes the diameter of the catalyst carrier 10, reference character L denotes the length of the catalyst carrier 10 in the axial direction. Also, the graph shows the high-temperature resistance and the creep strength of the outer cylinder 73.

As shown in Fig. 16, the creep strength of the outer cylinder 73 is fluctuated according to the ratio between the diameter W and the length L of the catalyst carrier 10, and the shorter the length L is to the diameter W, the higher the creep strength is. Since the creep strength of the outer cylinder 73 is preferably a reference value or more in the case of L/W = 1.5 as shown in the figure, it is preferable that the diameter W and the length L satisfy the relationship of L/W s 1.5. On the contrary, in a region of 1.5 < L/W, since the high-temperature resistance and the creep strength in the outer cylinder 73 become low, it is preferable that the catalyst device 7 does not fall into this region.

That is, if the catalyst device 7 of the seventh embodiment is to be fixed in the exhaust muffler 75 as shown in Fig. 13 and attached to a motor cycle, the diameter W and the length L of the catalyst carrier 10 satisfy the above requirements, and in the case of W = 40 mm, for example, L = 60 to 120 mm is preferable.

The above seventh embodiment shows an aspect to which the present invention is applied, and the present invention is not limited to the above embodiment. For example, in the seventh embodiment, the whole or a part of the outer cylinder 73 is explained to be formed by a material that can be oxidized more easily than stainless material such as a general carbon steel, but it may be so configured that the outer cylinder 73 is formed by a plurality of layers and only a layer exposed on the holding mat 12 side is formed by the above material. Moreover, in the above embodiment, platinum, rhodium, and palladium are explained to be carried by the catalyst carrier 10, but other catalyst substances such as iridium, cerium oxides and the like may be carried. The shape of the outer cylinder 73 is not limited to a cylinder but it may be a shape having an oval or a polygonal sectional shape as long as it is a hollow pipe. Also, the holding mat 12 is not limited to the one that covers the whole outer surface 11 of the catalyst carrier 10, but a part of the outer surface 11 may be exposed without being covered by the holding mat 12. It is needless to say that the other detailed configurations can be arbitrarily changed.

### [Eighth Embodiment]

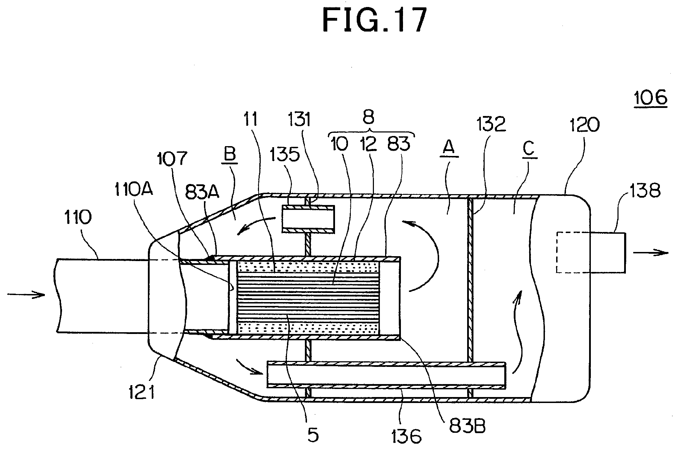

Fig. 17 is a diagram schematically illustrating an exhaust muffler 106 provided with a catalyst device 8 according to an eighth embodiment. The exhaust muffler 106 is disposed on a motor cycle similarly to the exhaust muffler 100 (Fig. 1) and functions as a silencer that decompresses a high-temperature/high-pressure exhaust gas having passed through the exhaust pipe 110 and exhausts it to the outside.

The exhaust muffler 106 has the cylindrical main body 120 to which the exhaust pipe 110 is connected, and the catalyst device 8 provided with the catalyst carrier 10 is supported in the cylindrical main body 120. The catalyst device 8 has an outer cylinder 83 instead of the outer cylinder 13 of the catalyst device 1 (Fig. 1). The catalyst device 8 penetrates and is fixed to the first bulkhead 131 closest to the end portion 110A of the exhaust pipe 110 similarly to the catalyst device 1. Here, the outer diameter of the outer cylinder 83 constituting the catalyst device 8 is formed slightly larger than the outer diameter of the exhaust pipe 110 so that the end portion 110A enters the outer cylinder 83 and is made stable. Then, in the state in which the end portion 110A enters the outer cylinder 83, an end portion 83A of the outer cylinder 83 is bonded to the outer side face of the exhaust pipe 110 by welding. At a bonded portion 107, the end portion 83A and the exhaust pipe 110 are directly bonded together.

Except for the configuration of the outer cylinder 83 and the bonded portion 107, the exhaust muffler 106 is constituted similarly to the exhaust muffler 100, and the catalyst device 8 is constituted similarly to the catalyst device 1 (Figs. 1 and 2) except that the outer cylinder 83 is provided instead of the outer cylinder 13 (Figs. 1 and 2).

In this eighth embodiment, portions configured similarly to the first to sixth embodiments are given the same reference numerals and the description will be omitted.

The catalyst device 8 has a configuration in which the outer cylinder 13 in the catalyst device 1 shown in Fig. 2 is replaced by the outer cylinder 83, provided with the catalyst carrier 10, which is a honeycomb porous structural body formed cylindrically, and the catalyst carrier 10 around which the holding mat 12 is wrapped is contained in the cylindrical outer cylinder 83.

The outer cylinder 83 is a hollow pipe with a circular section, for example, and both ends are opened. The material forming the outer cylinder 83 is a material with a linear expansion coefficient lower than that of the stainless material (JIS SUS 430 or the like, for example). The linear expansion coefficient (linear expansion coefficient in a temperature range including a normal temperature. The same applies to the following) of the stainless material is 10 × 10⁻⁶/°C (ferrite stainless steel) to 17 × 10⁻⁶/°C (austenite stainless steel), and the linear expansion coefficient of SUS 430 cited as an example of the stainless material is 10. 4 × 10⁻⁶/°C and the linear expansion coefficient of SUS304 is 17 × 10⁻⁶/°C. The material forming the outer cylinder 83 has a lower linear expansion coefficient, and preferable examples include either one of pure titanium, titanium alloy or titanium compound, or an alloy containing any one or more of pure titanium, titanium alloy and titanium compound. The linear expansion coefficient of titanium (JIS Class 1 to Class 4 pure titanium) is 8.4 × 10⁻⁶/°C, and Ti-6Al-4V alloy cited as an example of the titanium alloy has the linear expansion coefficient of 8.8 × 10⁻⁶/°C, and any other titanium alloys have linear expansion coefficients lower than that of the stainless materials.

Here, the material forming the outer cylinder 83 includes titanium alloys such as α alloy, α-β alloy, β alloy and the like or pure titanium (JIS Class 1 to Class 4), and the titanium alloy contains any one or more of other metals such as aluminum (Al), silicon (Si), iron (Fe), copper (Cu), tin (Sn), vanadium (V), niobium (Nb), molybdenum (Mo), chromium (Cr), zirconium (Zr) and the like together with titanium (Ti) and other unavoidable impurities may be contained and moreover, those containing oxygen (O) and the like can be cited. Specifically, Ti-6Al-4V, Ti-6Al-6V-2Sn, Ti-6Al-2Sn-4Zr-6Mo, Ti-1.5Al, Ti-10V-2Fe-3Al, Ti-7Al-4Mo, Ti-5Al-2.5Sn, Ti-6Al-5Zr-0.5Mo-0.2Si, Ti-5.5Al-3.5Sn-3Zr-0.3Mo-1Nb-0.3Si, Ti-8Al-1Mo-1V, Ti-6Al-2Sn-4Zr-2Mo, Ti-5Al-2Sn-2Zr-4Mo-4Cr, Ti-11.5Mo-6Zr-4.5Sn, Ti-15V-3Cr-3Al-3Sn, Ti-15Mo-5Zr-3Al, Ti-15Mo-5Zr, Ti-13V-11Cr-3Al and the like can be used. Also, a material made of pure titanium or titanium alloy containing fine particles of silicon carbide (SiC), boron carbide (B₄C and the like), glass, iron oxide and the like may be used.

These materials all have lower linear expansion coefficients than the stainless material as mentioned above. Moreover, the above enumerated materials and the material containing any other titanium are lighter in weight than the stainless material. While the density (specific weight) of SUS430 as an example of the stainless material is 7.98 g/cm³, the density of titanium (JIS Class 1 to Class 4 pure titanium) is 4.5 g/cm³, and the density of Ti-6Al-4V alloy as an example of the titanium alloy is 4.4 g/cm³. Thus, the catalyst device 8 formed using the outer cylinder 83 is light-weighted, and if the catalyst device 8 is installed on a motor cycle or an automobile, advantageous effects such as weight reduction of a car-body weight, improvement in design freedom of the car body, improvement in handling performance/workability and the like can be obtained.

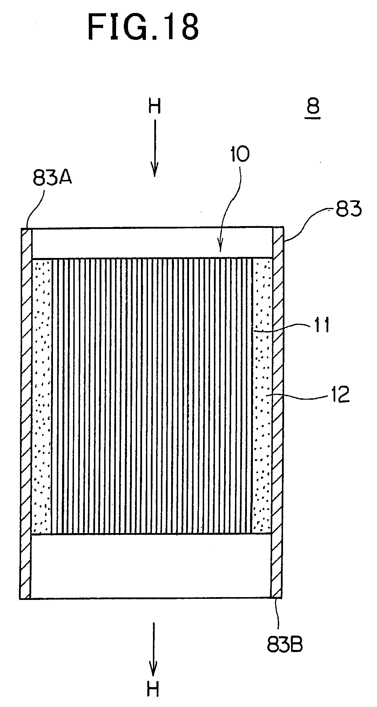

Fig. 18 is a sectional view of the catalyst device 8.

As shown in Fig. 18, the catalyst device 8 is configured such that the outer surface 11 is held by the outer cylinder 83 through the holding mat 12. In the process of manufacturing this catalyst device 8, in a process of containing the catalyst carrier 10 and the holding mat 12 in the outer cylinder 83, the holding mat 12 is wrapped around the catalyst carrier 10 and then, this is pressed into the outer cylinder 83 formed cylindrically in advance. Therefore, the holding mat 12 contained in the outer cylinder 83 is in the compressed state, and by means of a repulsive force of fibers constituting the holding mat 12, a pressing force acts between the catalyst carrier 10 and the holding mat 12 and between the holding mat 12 and the outer cylinder 83.

Since the catalyst carrier 10 is formed by a porous ceramic material, the surface roughness on the outer surface 11 is high, and the surface of the holding mat 12 is also a rough face. Therefore, the catalyst carrier 10 and the holding mat 12 are held so as not to move with respect to each other by a friction force. Also, the holding mat 12 and the outer cylinder 83 are held at predetermined positions in the outer cylinder 83 by friction against the pressure of the exhaust gas in the direction indicated by the symbol H in the figure.

This catalyst device 8 can be manufactured using the outer cylinder 83 instead of the outer cylinders 13 and 73 by the manufacturing method of the catalyst device 7 explained in the seventh embodiment and the manufacturing method of the catalyst device 1 explained in the above-described fourth to sixth embodiments. That is, by wrapping the holding mat 12 around the outer surface 11 of the catalyst carrier 10 manufactured by the above method, this catalyst carrier 10 is pressed into the outer cylinder 83 together with the holding mat 12 so as to form the catalyst device 8. In this manufacturing method, the solution to have palladium, rhodium, and platinum carried by the catalyst carrier 10 and the materials used in this solution are the same as those described in the fourth embodiment.

After the holding mat 12 and the catalyst carrier 10 are pressed into the outer cylinder 83, it is possible to further heat the catalyst device 8 so as to bond the holding mat 12 and the outer cylinder 83. In this case, the holding mat 12 and the inner face of the outer cylinder 83 are heated in the close contact state so as to be brought into close contact, made to adhere or bonded together to such a degree that a predetermined holding force is exerted.

In the eighth embodiment, the outer cylinder 83 formed cylindrically in advance is used, but methods such as canning and winding and tightening can be also used. In order to contain the catalyst carrier 10 by canning, the catalyst carrier 10 around which the holding mat 12 is wrapped is surrounded by split pieces in the shapes that the cylinder is applied with a plurality of pieces along the axial direction, and the split pieces are bonded by welding, adhering, bolting and the like so as to form the outer cylinder 83. In this method, when the plurality of split pieces are bonded together, the split pieces are pressed so as to compress the holding mat 12. Thus, the catalyst carrier 10 and the holding mat 12 are held at predetermined positions in the outer cylinder 83 by the repulsive force of the holding mat 12 in the state contained in the outer cylinder 83.

Also, in order to contain the catalyst carrier 10 by winding and tightening, a plate material used as a material of the outer cylinder 83 is wrapped around the catalyst carrier 10 around which the holding mat 12 is wrapped, and end portions of the plate material are bonded together by welding, adhering, bolting and the like so as to form the cylindrical outer cylinder 83. In this method, during the process of wrapping the plate material, a tension that compresses the holding mat 12 is applied to the plate material. Therefore, the catalyst carrier 10 and the holding mat 12 are held at predetermined positions in the outer cylinder 83 by the repulsive force of the holding mat 12 in the state contained in the outer cylinder 83.

Since the catalyst that purifies the exhaust gas is exposed to the high-temperature exhaust gas, an influence by expansion of a container that contains the catalyst carrier 10 should be considered. The catalyst carrier 10 can be held in the container using a holding member in a complicated shape for that purpose, but in this case, a process to make the holding member in compliance with the size of the catalyst carrier 10 is required, and a problem is caused that the number of manufacturing processes is increased. Also, the manufacture of such holding member is not easy.

The configuration explained in the eighth embodiment is intended, in view of the above problems, to realize the configuration that can stably hold the catalyst carrier 10 even in a high-temperature environment in the catalyst device 8 configured by containing the catalyst carrier 10 in the container without incurring the increase in the manufacturing processes or complication of the configuration.

The catalyst device 8 in the eighth embodiment and a catalyst device 9, which will be described later in the ninth and tenth embodiments include the catalyst carrier 10 made of ceramics that carries the catalyst purifying the exhaust gas of the internal combustion engine, the outer cylinder 83 that contains the catalyst carrier 10, and the holding mat 12 interposed between the outer cylinder 83 and the catalyst carrier 10 and characterized in that the outer cylinder 83 is constituted by a material with a linear expansion coefficient lower than that of the stainless material.

In the catalyst device 8 configured as above, if being disposed in the exhaust muffler 106 for use as shown in Fig. 17, for example, the high-temperature exhaust gas passes through the inside, whereby the catalyst carrier 10, the holding mat 12, and the outer cylinder 83 are all exposed to the high temperature. The ceramics constituting the catalyst carrier 10 and the holding mat 12 have an extremely small linear expansion coefficient, and as the honeycomb catalyst carrier made of ceramics, for example, those with the linear expansion coefficient of approximately 1.2 × 10⁻⁶/°C are known. Thus, in the state in which the catalyst device 8 is at a high temperature, the catalyst carrier 10 and the outer cylinder 83 are expanded at different rates, a clearance between the catalyst carrier 10 and the outer cylinder 83 is widened, and it is likely that the holding force of the catalyst carrier 10 by the repulsive force of the holding mat 12 is weakened.

However, in the catalyst device 8 in the eighth embodiment, since the outer cylinder 83 is formed by a material with a linear expansion coefficient lower than that of the stainless material (JIS SUS430 or the like, for example) as mentioned above, expansion of the outer cylinder 83 by heat is extremely small, there is no fear that a clearance is generated between the catalyst carrier 10 with a low linear expansion coefficient and the holding mat 12 or the repulsive force of the holding mat 12 is remarkably lowered. Thus, even though being exposed to the high temperature of the exhaust gas, the catalyst device in which the holding performance of the catalyst carrier 10 is rarely changed from the state at a normal temperature can be realized. As a result, there is no need to provide a projection or a separate member to fix or lock the catalyst carrier 10 so as not to be moved in the outer cylinder 83 as preparation for the case in which the holding force by the holding mat 12 is lowered. Therefore, the catalyst carrier 10 and the holding mat 12 can be held stably even if it is exposed to the heat of the exhaust gas without complicating the structure.

Also, the shape of the outer cylinder 83 is a simple cylinder that satisfies requirements to contain the catalyst carrier 10 and the holding mat 12, and other complicated shapes are not required. Thus, the number of processes required for manufacture of the outer cylinder 83 is not different from that in the case of manufacture of the outer cylinder 83 by a material such as stainless or iron, for example. As mentioned above, by using a material with a linear expansion coefficient lower than that of the stainless material for the material of the outer cylinder 83, the catalyst device 8 that can stably hold the catalyst carrier 10 and the holding mat 12 even at a high temperature can be easily realized without using a complicated structure or without incurring the increase in the number of manufacturing processes and complication of the mechanism.

Particularly, as explained in the eighth embodiment, if the material of the outer cylinder 83 is any of pure titanium, titanium alloy and titanium compound or an alloy containing any one or more of pure titanium, titanium alloy and titanium compound, the linear expansion coefficient of the outer cylinder 83 is drastically lower than that of the stainless materials and the like, and a deformation amount caused by expansion when it is exposed to the high-temperature exhaust gas during use can be extremely small. Therefore, since the holding performance of the catalyst carrier 10 is rarely changed even in a high-temperature environment, accuracy required to ensure the holding performance of the catalyst carrier 10, that is, a range of the allowable accuracy is widened, which provides an advantage that freedom in design and manufacture is improved.

Moreover, any of pure titanium, titanium alloy and titanium compound or an alloy containing any one or more of pure titanium, titanium alloy and titanium compound cited as the material for the outer cylinder 83 has an advantage of a high melting point, and no problem is caused even if it is installed at a position close to the internal combustion engine in the exhaust path and can be used for a long time even in an environment exposed to the high-temperature exhaust gas. The above materials have an advantage of light weight, and advantageous effects can be obtained such as weight reduction of a car-body weight, improvement in freedom of car-body design, improvement in handling performance / workability and the like when being installed on a motor cycle or an automobile, for example.

### [Ninth Embodiment]

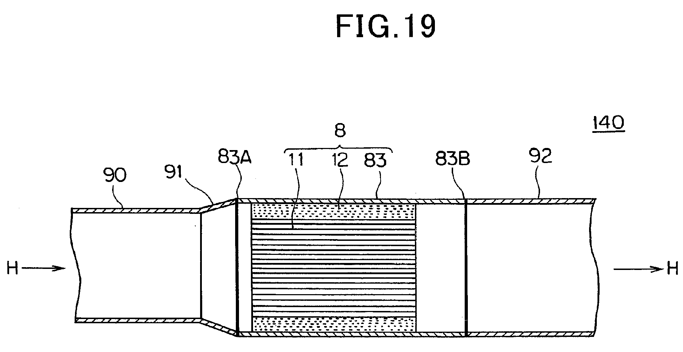

Fig. 19 is a sectional view illustrating an exhaust pipe structure 140 according to a ninth embodiment.

In the ninth embodiment, portions configured similarly to the first to seventh embodiments and the eighth embodiment are given the same reference numerals and the description will be omitted.

The exhaust pipe structure 140 shown in Fig. 19 is constituted by bonding an exhaust pipe 90 made of titanium on the side of an engine (not shown) of the catalyst device 8 and by bonding an exhaust pipe 92 made of titanium on the side of an exhaust muffler (not shown) on the catalyst device 8. The exhaust pipe structure 140 is a pipeline constituting a part of the exhaust path connecting an exhaust port of the engine and the exhaust muffler, and specifically, that is a pipe that connects an exhaust manifold, a collecting pipe or both of them to the engine or the exhaust muffler. With respect to the flow of the exhaust gas indicated by the symbol H, the exhaust pipe 90 made of titanium is located on the upstream side of the catalyst device 8, while the exhaust pipe 92 made of titanium is located on the downstream side of the catalyst device 8.

The exhaust pipe 90 made of titanium is formed by a hollow pipe with a diameter smaller than that of the outer cylinder 83, and a tapered portion 91 whose diameter is enlarged gradually is formed at an end portion of the exhaust pipe 90 made of titanium, and the outer cylinder 83 is bonded to the distal end of the tapered portion 91. Also, the exhaust pipe 92 made of titanium is a hollow pipe with the same diameter as that of the outer cylinder 83.

Also, the exhaust pipe 90 made of titanium and the exhaust pipe 92 made of titanium are both formed by a titanium material similar to that of the outer cylinder 83.

That is, in the ninth embodiment, the outer cylinder 83, the exhaust pipe 90 made of titanium, and the exhaust pipe 92 made of titanium are all formed by titanium alloys such as α alloy, α-β alloy, β alloy and the like or pure titanium (JIS Class 1 to Class 4), and the titanium alloy contains any one or more of other metals such as aluminum (Al), silicon (Si), iron (Fe), copper (Cu), tin (Sn), vanadium (V), niobium (Nb), molybdenum (Mo), chromium (Cr), zirconium (Zr) and the like together with titanium (Ti) and other unavoidable impurities may be contained and moreover, those containing oxygen (O) and the like can be cited. Specifically, Ti-6Al-4V, Ti-6Al-6V-2Sn, Ti-6Al-2Sn-4Zr-6Mo, Ti-1.5Al, Ti-10V-2Fe-3Al, Ti-7Al-4Mo, Ti-5Al-2.5Sn, Ti-6Al-5Zr-0.5Mo-0.2Si, Ti-5.5Al-3.5Sn-3Zr-0.3Mo-1Nb-0.3Si, Ti-8Al-1Mo-1V, Ti-6Al-2Sn-4Zr-2Mo, Ti-5Al-2Sn-2Zr-4Mo-4Cr, Ti-11.5Mo-6Zr-4.5Sn, Ti-15V-3Cr-3Al-3Sn, Ti-15Mo-5Zr-3Al, Ti-15Mo-5Zr, Ti-13V-11Cr-3Al and the like can be used. Also, a material made of pure titanium or titanium alloy containing fine particles of silicon carbide (SiC), boron carbide (B₄C and the like), glass, iron oxide and the like may be used.

The outer cylinder 83, the exhaust pipes 90 and 92 made of titanium are all preferably formed by the same material, considering ease of welding, ease of material availability, a manufacturing cost and the like, but a structure in which the outer cylinder 83, the exhaust pipes 90 and 92 made of titanium are not formed by the same material is allowable, and the outer cylinder 83, the exhaust pipes 90 and 92 made of titanium may be formed by different materials, as long as they are any one of the materials containing the above-described titanium.

As mentioned above, since the outer cylinder 83, the exhaust pipes 90 and 92 made of titanium are all formed by any one of pure titanium, titanium alloy, and titanium compound or an alloy containing any one of pure titanium, titanium alloy, and titanium compound, the exhaust pipe 90 made of titanium and the outer cylinder 83 as well as the outer cylinder 83 and the exhaust pipe 92 made of titanium can be easily and reliably bonded by welding, for example.

That is, as shown in Fig. 19, the distal end of the tapered portion 91 and the end portion 83A of the outer cylinder 83 have the same diameter, and they are bonded together by butt welding. Also, the end portion 83B of the outer cylinder 83 and the distal end of the exhaust pipe 92 made of titanium have the same diameter and similarly bonded by butt welding. Since welding between metal materials containing titanium goes together well, bonding can be realized easily with sufficient strength.

In the exhaust pipe structure 140 according to the ninth embodiment, in addition to the effect explained in the above-described eighth embodiment, there is an advantage that the outer cylinder 83 that contains the catalyst carrier 10 and the holding mat 12 in the catalyst device 8 can be used as a part of the exhaust pipe structure 140. As a result, an outer sheath or the like to contain the catalyst device 8 is not required, and reduction of a cost and a weight can be promoted. Also, since the exhaust pipes 90 and 92 made of titanium bonded to the outer cylinder 83 are formed by any one of pure titanium, titanium alloy, and titanium compound or an alloy containing any one of pure titanium, titanium alloy, and titanium compound similarly to the outer cylinder 83, the metals of the same type or similar types are bonded together, and they can be bonded easily by welding or the like and high bonding strength can be obtained.

### [Tenth Embodiment]

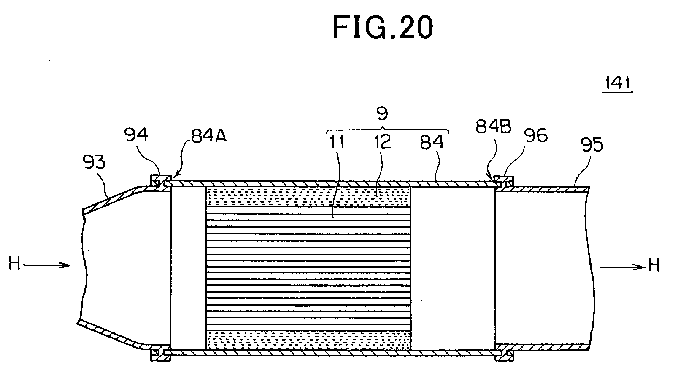

Fig. 20 is a sectional view illustrating the exhaust pipe structure 140 according to the ninth embodiment.

In this tenth embodiment, portions configured similarly to the first to seventh, eighth, and ninth embodiments are given the same reference numerals and the description will be omitted.

The exhaust pipe structure 141 shown in Fig. 20 is formed to have an exhaust pipe 93 made of stainless bonded on the side of an engine (not shown) of the catalyst device 9 and to have an exhaust pipe 95 made of stainless bonded to the side of an exhaust muffler (not shown) of the catalyst device 9.

An exhaust pipe structure 141 is a pipeline constituting a part of an exhaust path connecting an exhaust port of the engine and the exhaust muffler and specifically, that is a pipe that connects an exhaust manifold, a collecting pipe or both of them to the engine or the exhaust muffler. With respect to the flow of the exhaust gas indicated by the symbol H, the exhaust pipe 93 made of stainless is located on the upstream side of the catalyst device 9, while the exhaust pipe 95 made of stainless is located on the downstream side of the catalyst device 9.

The catalyst device 9 is provided with an outer cylinder 84 instead of the outer cylinder 83 in the catalyst device 8 described above. The outer cylinder 84 is a cylindrical hollow pipe formed by the same material as that of the outer cylinder 83. A difference from the outer cylinder 83 is that an end portion 84A on the upstream side and an end portion 84B on the downstream side with respect to the exhaust direction H are worked, respectively, so as to be bonded to the exhaust pipes 93 and 95 made of stainless.

Also, the exhaust pipes 93 and 95 made of stainless are both hollow pipes formed by a stainless material (SUS430, SUS304 or the like). At bonded portions between the exhaust pipe 93 made of stainless and the outer cylinder 84 as well as the outer cylinder 84 and the exhaust pipe 95 made of stainless, the exhaust pipes 93 and 95 made of stainless both have somewhat smaller diameters than the outer cylinder 84 and enter the inside of the outer cylinder 84. By welding bonding pieces 94 and 96 in this state, the outer cylinder 84 and the exhaust pipe 93 made of stainless as well as the outer cylinder 84 and the exhaust pipe 95 made of stainless are bonded together.

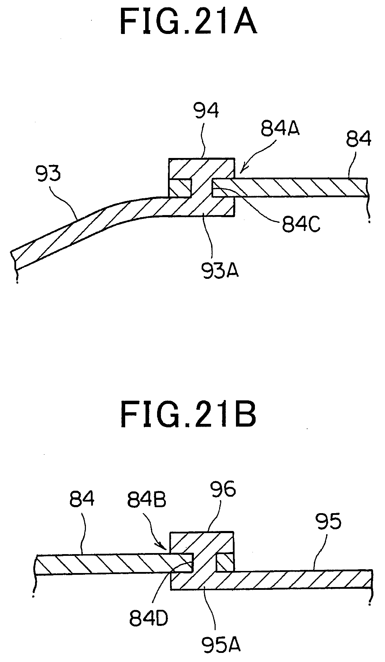

Figs. 21 are enlarged views illustrating a configuration of the bonded portion in the exhaust pipe structure 140, in which Fig. 21A shows the bonded portion between the exhaust pipe 93 made of stainless and the outer cylinder 84 and Fig. 21B shows the bonded portion between the outer cylinder 84 and the exhaust pipe 95 made of stainless.

As shown in Fig. 21A, a hole 84C is formed in the end portion 84A, which is an opening end on the upstream side of the outer cylinder 84. The hole 84C is a hole penetrating the outer cylinder 84 and formed in plural with a predetermined interval along the circumferential direction of an opening edge of the outer cylinder 84.

An end portion 93A of the exhaust pipe 93 made of stainless enters the end portion 84A deeper than the hole 84C, and in this state, a bonding piece 94 is welded to the end portion 93A. The bonding piece 94 is a metal piece having a shape passing through the hole 84C from the outside of the outer cylinder 84 and brought into contact with the end portion 93A and is formed by the same stainless material as that of the exhaust pipe 93 made of stainless.

The end portion 93A and the bonding piece 94 are welded together by projection welding. That is, in a state in which the bonding piece 94 is inserted into the hole 84C, the bonding piece 94 and the exhaust pipe 93 made of stainless are electrified and they are bonded together by heat generation at their contact portion. By this method, the bonding piece 94 is welded to the end portion 93A through all the holes 84C disposed in the end portion 84A. Here, the plurality of bonding pieces 94 are bonded, but the plurality of bonding pieces 94 may be connected to each other or they may be independent small pieces.

On the other hand, as shown in Fig. 21B, in the end portion 84B, which is an opening end on the downstream side of the outer cylinder 84, a hole 84D is formed. The hole 84D is a hole penetrating the outer cylinder 84 and formed in plural with a predetermined interval along the circumferential direction of the opening edge of the outer cylinder 84.

An end portion 95A of the exhaust pipe 95 made of stainless enters the end portion 84B deeper than the hole 84D, and in this state, a bonding piece 96 is welded to the end portion 95A. The bonding piece 96 is a metal piece having a shape passing through the hole 84D from the outside of the outer cylinder 84 and brought into contact with the end portion 95A and is formed by the same stainless material as that of the exhaust pipe 95 made of stainless.

Then, the end portion 95A and the bonding piece 96 are welded by projection welding. That is, in a state in which the bonding piece 96 is inserted into the hole 84D, the bonding piece 96 and the exhaust pipe 95 made of stainless are electrified and they are bonded together by heat generation at their contact portion. By this method, the bonding piece 96 is welded to the end portion 95A through all the holes 84D disposed in the end portion 84B. Here, the plurality of bonding pieces 96 are bonded, but the plurality of bonding pieces 96 may be connected to each other or they may be independent small pieces.

In the exhaust pipe structure 141, the outer cylinder 84 made of a material containing titanium and the exhaust pipes 93 and 95 made of stainless need to be bonded together. In bonding these different types of metals, the holes 84C and 84D are disposed in the end portions 84A and 84B of the outer cylinder 84, and the bonding pieces 94 and 96 are bonded to the exhaust pipes 93 and 95 made of stainless using these holes 84C and 84D. According to this method, the outer cylinder 84 and the exhaust pipes 93 and 95 made of stainless can be easily bonded with sufficient strength by welding the same type of metal.

The catalyst device 9 is constituted by containing the catalyst carrier 10 and the holding mat 12 in the outer cylinder 84 made of a material with the linear expansion coefficient lower than that of the stainless material similarly to the above-described catalyst device 8. Thus, the advantages explained in the above-described eighth and ninth embodiments can be obtained.

In addition, in the exhaust pipe structure 141, by using more inexpensive exhaust pipes 93 and 95 made of stainless, the structure can be realized with a lower cost. In this exhaust pipe structure 141, too, there are advantages as explained in the above ninth embodiment, that is, the advantages that the outer cylinder 84 for containing the catalyst carrier 10 and the holding mat 12 can be used as a part of the exhaust pipe structure 141, an outer sheath or the like for containing the catalyst device 9 is not required, and reduction of a cost and a weight can be promoted.

Also, the bonding between the outer cylinder 84 and the exhaust pipes 93 and 95 made of stainless, which is bonding between different types of metals, can be performed easily and reliably by a method of projection welding by forming the holes 84C and 84D in the end portions 84A and 84B of the outer cylinder 84 and by applying the bonding pieces 94 and 96 from outside.

Also, the eighth to tenth embodiments only show a specific aspect and can be arbitrarily changed. For example, in the eighth to tenth embodiments, the shape of the outer cylinders 83 and 84 is explained to be cylindrical, but the present invention is not limited to that, and it may have an oval or polygonal sectional shape as long as it is a hollow pipe.

### [Eleventh Embodiment]

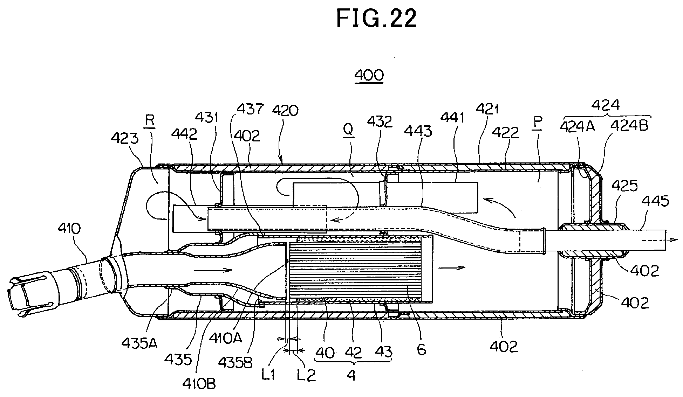

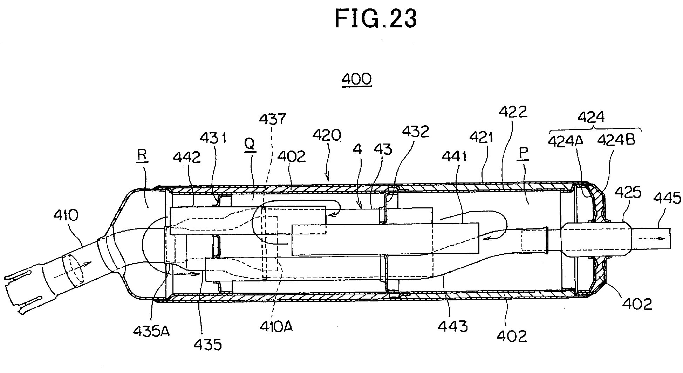

Figs. 22 and 23 are sectional views of an exhaust muffler 400 provided with a ceramics catalyst device 4 according to an eleventh embodiment. This exhaust muffler 400 is connected to a rear end of an exhaust pipe 410 extending from an engine of a motor cycle and functions as a silencer that decompresses the exhaust gas having passed through this exhaust pipe 410 and exhaust it to the outside.

The exhaust muffler 400 has a cylindrical main body 420 to which the single exhaust pipe 410 extending from the engine is connected, and the ceramics catalyst device (hereinafter referred to as a catalyst device) 1 provided with a catalyst carrier 40 made of ceramics is supported in this cylindrical main body 420.

This cylindrical main body 420 is provided with an outer cylinder 421 constituting an outer circumferential face of this cylindrical main body 420, an inner cylinder 422 to be inserted into this outer cylinder 421, and a front wall portion 423 and a rear wall portion 424 substantially in shape of bowl connected so as to cover a front-portion opening and a rear-portion opening of these cylindrical members 421 and 422.

An internal space formed by this inner cylinder 422, the front wall portion 423 and the rear wall portion 424 is divided into a plurality of (three in this example) expansion chambers (hereinafter referred to as a first expansion chamber P, a second expansion chamber Q, and a third expansion chamber R) through a plurality of (two pieces in this embodiment) bulkheads (hereinafter referred to as a first bulkhead 431 and a second bulkhead 432), and an end portion 410A of the exhaust pipe 410 penetrates the front wall portion 423 of the cylindrical main body 420 and is inserted into the cylindrical main body 420.

To the first bulkhead 431 located on the front side in the cylindrical main body 420, a positioning cylindrical member (positioning member) 435 penetrating this first bulkhead 431 and extending in the longitudinal direction of the cylindrical main body 420 is attached. This positioning cylindrical member 435 is formed in a cylindrical shape whose diameter is gradually narrowed toward the front wall portion 423 side, and the exhaust pipe 410 is inserted into a front end portion 435A with the smallest diameter substantially without a clearance and is bonded by welding or the like.

Also, in a rear end portion 435B of this positioning cylindrical member 435, the outer cylinder 43 constituting an outer case of the catalyst device 4 is fitted and bonded by welding or the like. The exhaust pipe 410 has an enlarged diameter portion 410B whose diameter is gradually enlarged rearward in the positioning cylindrical member 435, and the end portion 410A of this enlarged diameter portion 410B is located in the rear of the positioning cylindrical member 435. That is, the end portion 410A of the exhaust pipe 410 is located in the rear of an attachment portion 437 between the positioning cylindrical member 435 and the outer cylinder 43 and enters the outer cylinder 43. Also, the end portion 410A of this exhaust pipe 410 is formed with the substantially same diameter as that of the catalyst carrier 40 in the catalyst device 4 and is arranged close to the catalyst carrier 40.

The outer cylinder 43 of the catalyst device 4 extends along the longitudinal direction of the cylindrical main body 420, penetrates the second bulkhead 432, and is supported by the second bulkhead 432. In this case, since the catalyst device 4 is supported by the positioning cylindrical member 435 and the second bulkhead 432, the supporting strength can be sufficiently ensured. Also, since the catalyst device 4 and the exhaust pipe 410 are supported by the same positioning cylindrical member 435 , the positional relationship between the catalyst device 4 and the exhaust pipe 410 can be accurately set.

A sound-absorbing material 402 made of glass wool or the like is disposed between the outer cylinder 421 and the inner cylinder 422 of the cylindrical main body 420, and the sound-absorbing material 402 is also disposed between an inner rear wall portion 424A and an outer rear wall portion 424B constituting the rear wall portion 424 and on the inner side of a cylindrical body 425 covering the outer circumference of a tail pipe 445 penetrating the rear wall portion 424.

The catalyst device 4 makes the end portion 410A side of the exhaust pipe 410 communicate with the first expansion chamber P through a large number of the fine pores (penetrating holes) 5 formed in the catalyst carrier 40 and purifies the exhausts gas exhausted from this exhaust pipe end portion 410A when it passes through the catalyst carrier 40. Here, the outer diameter of the catalyst device 4 is formed larger than the outer diameter of the exhaust pipe end portion 410A, and the exhaust pipe end portion 410A and the catalyst carrier 40 are positioned substantially coaxially by the positioning cylindrical member 435. Thus, the exhaust gas exhausted from the exhaust pipe end portion 410A can be made to enter the catalyst carrier 40 efficiently and is made to flow into the first expansion chamber P.

Also, to the second bulkhead 432, a first communication pipe 441 and a third communication pipe 443 penetrate and are fixed at a position displaced from the catalyst device 4, while to the first bulkhead 431, a second communication pipe 442 penetrates and is fixed at a position displaced from the positioning cylindrical member 435.

The first communication pipe 441 makes the first expansion chamber P communicate with the second expansion chamber Q, while the second communication pipe 442 makes the second expansion chamber Q communicate with the third expansion chamber R. Also, the third communication pipe 443 has one end crossing the second expansion chamber Q, penetrating the first bulkhead 431, and is opened in the third expansion chamber R, while the other end crossing the first expansion chamber P, and the tail pipe 445 connected to the rear end thereof penetrates the rear wall portion 424 of the cylindrical main body 420 and makes the third expansion chamber R communicate with the space outside the exhaust muffler 400.

In this exhaust muffler 400, the exhaust gas exhausted from the end portion 410A of the exhaust pipe 410 passes through the catalyst device 4 and flows into the first expansion chamber P in the exhaust muffler 400 as shown by an arrow in Fig. 22, reverses its flow direction, passes through the first communication pipe 441 and flows into the second expansion chamber Q, reverses the flow direction again, passes through the second communication pipe 442 and flows into the third expansion chamber R and then, reverses the flow direction again and passes through the third communication pipe 443 and the tail pipe 445 and is exhausted to the outside.

Since the sectional area of this cylindrical main body 420 is formed larger than the exhaust pipe 410 inserted into this cylindrical main body 420, the exhaust gas is decompressed when flowing into each of the expansion chambers P to R. Also, since the catalyst device 4 is arranged in the cylindrical main body 420 of the exhaust muffler 400, the layout space for the catalyst device 4 is easily ensured. Also, since the catalyst device 4 is arranged coaxially on the end portion 410A of the exhaust pipe 410, the exhaust gas exhausted from the end portion 410A of the exhaust pipe 410 can be made to flow into the catalyst device 4 smoothly without changing the flow direction thereof.

Subsequently, the catalyst device 4 will be described in detail. The catalyst device 4 is constituted similarly to the catalyst device 1 shown in Fig. 2. That is, the catalyst device is provided with the catalyst carrier 40 constituted similarly to the catalyst carrier 10 in the catalyst device 1 and carrying a catalyst having the exhaust gas purification function, the holding mat (also referred to as a catalyst holding mat) 42 constituted similarly to the holding mat 12 (Fig. 2) and covering the outer circumference of the catalyst carrier 40, and the outer cylinder 43 constituted similarly to the outer cylinder 13 (Fig. 2) and holding the catalyst carrier 40 through the holding mat 42.

The catalyst carrier 40 uses a honeycomb structural body in which the fine pores 5 extending along the axial direction thereof formed in the honeycomb state as a base material and carries a catalyst of platinum, palladium, rhodium and the like that decomposes the exhaust gas component inside this base material similarly to the above-described catalyst carrier 10 (Figs. 1 and 2). That is, the catalyst carrier 40 functions as a three-way catalyst that removes hydrocarbon, carbon monoxide, and nitrogen oxide in the exhaust gas by platinum, palladium, rhodium and the like and by oxidation and reduction reactions. Here, the sectional shape of the catalyst carrier 40, that is, the sectional shape of the honeycomb structural body is formed in a columnar shape (cylindrical shape) having a true circular section. Other shapes including an oval shape may be used as the sectional shape.

Also, in the eleventh embodiment, a ceramics honeycomb formed by a ceramics porous body having a porous structure is used as the honeycomb structural body. Thus, the entire weight can be reduced as compared with a case using a honeycomb structural body made of metal, and also, since the porous ceramics is used, the surface area inside can be easily ensured, and the catalyst can be easily carried, which are advantages.

Here, as a preferable example of a material of the ceramics to be used as the base material of the catalyst carrier 40, various heat resistant ceramics including cordierite, mullite, alumina, and aluminate of alkali earth metal, silicon carbide, silicon nitride or the like or their similar substances can be used. Also, the shape of the base material may be in any shape such as a powder, a granule, a grain (including a ball), a pellet (including a cylinder and a ring), a tablet, a honeycomb or the like and it is preferably a honeycomb structure.

The solution to make the catalyst carrier 40 carry palladium, rhodium, and platinum is made by dissolving a compound containing these metals in a predetermined solvent. Materials used for making the palladium carried include nitrate salt, chloride, acetate salt, complex salt (dichlorotetraammine palladium or the like) or the like. Also, materials used for making platinum carried include nitrate salt, chloride, acetate salt, complex salt (dinitrodiammine platinum, trichlorotriammine platinum or the like) or the like. Also, materials for making rhodium carried by the catalyst carrier include nitrate salt, chloride, acetate salt, sulfate salt, complex salt (pentaamminechlororhodium, hexaammminerhodium or the like) or the like. By adjusting a solution of these materials and by impregnating the above-described catalyst carrier 40 with this solution, the catalyst carrier 40 can be made to carry palladium, platinum, and rhodium. As the solvent, water or organic solvents can be used, but water is preferable in view of solubility, easiness of treatment of waste solution, availability and the like. Also, after the catalyst carrier is impregnated with the solution, by heating and drying the catalyst carrier to approximately 250 °C, for example, palladium, rhodium, and platinum are carried by the porous structure of the catalyst carrier 40, and nitrogen oxides, HC (hydrocarbon), CO (carbon monoxide) and the like in the exhaust gas can be decomposed and purified. Depending on the required exhaust gas purification performances, the catalyst may be constituted by making only any one or two types of palladium, rhodium, and platinum carried by the catalyst carrier 40. Alternatively, other than palladium, rhodium, and platinum, a metal or a metal compound and the like functioning as a catalyst may be carried by the catalyst carrier 40.

The holding mat 42 is formed by integrating ceramic fibers into a lengthy mat state, and it is wrapped around the outer surface of the catalyst carrier 40 similarly to the holding mat 12. At one end of the holding mat 42, a projection-shaped mating portion is formed, while at the other end, a recess-shaped mating portion is formed, and thus, when the holding mat 42 is wrapped around the catalyst carrier 40, the mat can be held in a state in which the mating portions B are engaged with each other and wrapped around the catalyst carrier 40.

Also, since the holding mat 42 is a collection in which fibers entwine each other, a numerous number of tiny clearances are formed on the surface and the inside. Thus, the holding mat 42 has a relatively high elasticity and has a high surface roughness and a relatively high friction coefficient on the surface. Here, the material of the holding mat 42 may be anything as long as it has heat resistance and elasticity, and integration of fibrous metals or glass wool or the like can be also used in addition to the ceramics materials such as alumina, mullite, cordierite, silicon carbide or the like.

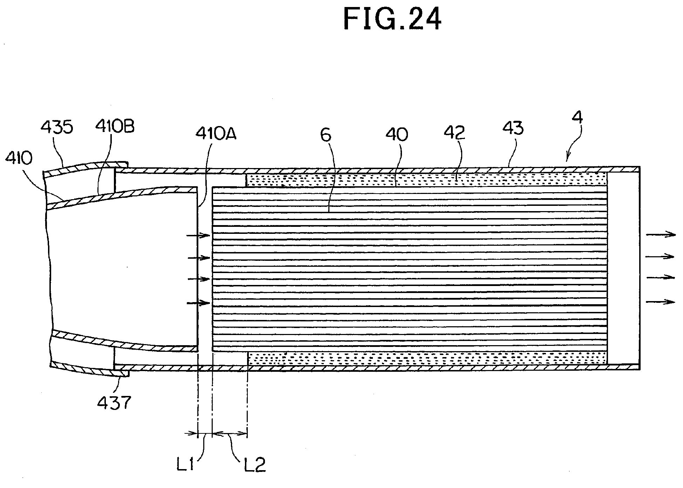

The outer cylinder 43 is formed cylindrically, and more specifically, as shown in Fig. 24, it has a diameter larger than the outer diameter of the exhaust pipe 410 and is formed longer than the catalyst carrier 40 and the holding mat 42 in order to ensure a fitted portion with the above-described positioning cylindrical member 435. As the material of this outer cylinder 43, a metal with high strength and high heat resistance is used, and a steel material such as stainless is used, for example.

The catalyst carrier 40 around which the holding mat 42 is wrapped is fitted into the outer cylinder 43 and contained in the outer cylinder 43. In this case, since the holding mat 42 is sandwiched between the outer cylinder 43 and the catalyst carrier 40 in the compressed state, a holding force for holding the catalyst carrier 40 in the outer cylinder 43 is generated by an elastic force and a friction force of the holding mat 42. Therefore, even if the outer surface of the catalyst carrier 40 is a ceramics surface with a relatively low friction coefficient, the holding force can be ensured by using this holding mat 42.

When the catalyst carrier 40 around which the holding mat 42 is wrapped is contained in the outer cylinder 43, methods other than press-fitting, that is, canning or winding and tightening can be used, for example. In the case of canning, the catalyst carrier 40 around which the holding mat 42 is wrapped is surrounded by split pieces formed so as to split the cylinder into a plurality of pieces along the axial direction, and the split pieces are bonded so as to form the outer cylinder 43. Also, in the case of winding and tightening, a plate material is wrapped around the catalyst carrier 40 around which the holding mat 42 is wrapped, and end portions of the plate material are bonded together so as to form the outer cylinder 43. Here, the bonding of the canning and winding and tightening is performed by welding, adhering, bolting or the like.

In the eleventh embodiment, as shown in Fig. 22, the catalyst device 4 is supported by the positioning cylindrical member 435 that holds the exhaust pipe 410 and the second bulkhead 432 and the exhaust pipe end portion 410A and the catalyst carrier 40 are laid out coaxially, and the exhaust pipe end portion 410A is laid out close to the catalyst carrier 40. Also, the end portion of the holding mat 42 on the exhaust pipe 410 side is, as shown in Fig. 24, arranged with offset to the exhaust gas downstream side from the end portion of the catalyst carrier 40 so that a distance (axial distance L1) between the exhaust pipe end portion 410A and the catalyst carrier 40 is smaller than the offset amount (offset amount L2). The axial distance L1 is preferably approximately 3 to 7 mm and is set to 5 mm, for example. The offset amount L2 is preferably approximately 5 to 20 mm and is set to 10 mm, for example.

In some catalyst device in which the catalyst is carried by the prior-art catalyst carrier made of ceramics , for example, an end-portion ring that applies an attaching pressure in the axial direction to the mat surrounding the outer circumference of the catalyst carrier is disposed inside a metal container. With this configuration, the provision of the end-portion ring increases the number of components. However, if the end-portion ring is removed from this configuration, it is expected that the exhaust gas is brought into contact with the mat, and a configuration in which the influence of the exhaust gas on the mat can be reduced has been in demand. In view of this problem, in the eleventh embodiment, the configuration with the purpose of providing a ceramic catalyst device that reduces the influence of the exhaust gas on the mat and can reduce the number of components is explained. That is, as explained as the eleventh embodiment, in the catalyst device 4 provided with the catalyst carrier 40 made of ceramics that carries the catalyst for purifying the exhaust gas from the exhaust pipe 410, the outer cylinder 43 that holds this catalyst carrier 40, and the holding mat 42 sandwiched between the catalyst carrier 40 and the outer cylinder 43, the end portion 410A of the exhaust pipe 410 is arranged close to the catalyst carrier 40.

As mentioned above, with the configuration in which the exhaust pipe end portion 410A is arranged close to the catalyst carrier 40, the exhaust gas exhausted from the exhaust pipe end portion 410A flows into the catalyst carrier 40 hardly expanding in the radial direction with respect to the flow direction thereof as shown in an arrow in Fig. 24. As a result, corrosion of the holding mat 42 by the exhaust gas, that is, corrosion of the holding mat 42 can be suppressed. Even if the exhaust gas exhausted from the exhaust pipe end portion 410A flows while expanding in the radial direction immediately after the exhaust pipe end portion 410A, since the outer diameter of the catalyst carrier 40 is formed larger than the outer diameter of the exhaust pipe end portion 410A, the exhaust gas can be made to flow into the catalyst carrier 40 without being brought into contact with the holding mat 42.

Here, the axial distance L1 (See Figs. 22 and 24) between the exhaust pipe end portion 410A and the catalyst carrier 40 is a distance separated by linear expansion of the exhaust pipe 410 in the longitudinal direction by the exhaust gas and is set to the minimum distance by which the exhaust pipe 410 does not touch the catalyst carrier 40 even if the pipe is linearly expanded by the heat of the exhaust gas. Thus, while the influence of the exhaust pipe 410 by heat expansion on the catalyst carrier 40 is avoided, the exhaust pipe end portion 410A and the catalyst carrier 40 can be brought closer to each other.

As mentioned above, according to the eleventh embodiment, since the exhaust pipe end portion 410A is arranged close to the catalyst carrier 40, the influence of the exhaust gas on the holding mat 42 (wind erosion of the holding mat 42 or the like) can be reduced without disposing the prior-art end portion ring covering the end portion of the holding mat. Also, since the end portion ring is not disposed, the number of components can be reduced, complication of the component shapes can be avoided, and a simple configuration can be realized.

Also, in the eleventh embodiment, since the exhaust pipe end portion 410A and the catalyst carrier 40 are arranged coaxially close to each other, the exhaust gas from the exhaust pipe end portion 410A can be made to flow into the catalyst carrier 40 more reliably, and the wind erosion of the holding mat 42 can be more reliably suppressed.

Moreover, in the eleventh embodiment, since the catalyst device 4 and the exhaust pipe 410 are positioned and supported by the positioning cylindrical member 435 supported by the first bulkhead 431, the exhaust pipe end portion 410A and the catalyst carrier 40 can be positioned with accuracy. Therefore, the catalyst capacity can be efficiently used, diameter enlargement of the catalyst carrier 40 can be avoided, the size of the exhaust muffler 400 that contains the catalyst device 4 can be reduced, and the design freedom of the muffler shape can be improved.

Also, since the exhaust pipe end portion 410A is located closer to the catalyst carrier 40 side than the attachment portion 437 between the positioning cylindrical member 435 that positions the exhaust pipe 410 and the outer cylinder 421, the exhaust pipe end portion 410A can be further made closer to the catalyst carrier 40. Thus, the flow of the exhaust gas into the holding mat 42 can be expected to be reduced.

Moreover, since the end portion of the holding mat 42 on the exhaust pipe 410 side is arranged with offset to the exhaust gas downstream side than the end portion of the catalyst carrier 40 and the distance L1 between the exhaust pipe end portion 410A and the catalyst carrier 40 is made smaller than the offset amount L2, the catalyst carrier 40 can be brought closer to the exhaust pipe end portion 410A and the holding mat 42 can be separated from the exhaust pipe end portion 410A so that the holding mat 42 can be protected and reduction of wind erosion can be also expected.

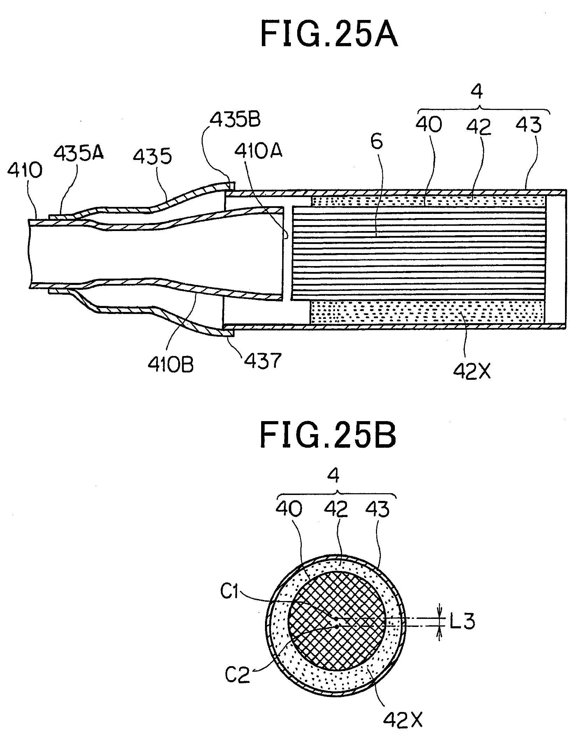

This eleventh embodiment is only one configuration example and is capable of various design variations. For example, in the eleventh embodiment, the case in which the holding mat 42 is wrapped around the outer circumference of the catalyst carrier 40 once is explained, but by increasing the thickness of a mated portion 42X by overlapping the both ends of the holding mat 42, the catalyst carrier 40 is made eccentric with respect to the outer cylinder 43 as shown in Figs. 25A and 25B. Here, Fig. 25A shows the exhaust pipe end portion 410A in the exhaust muffler 400, the positioning cylindrical member 435, and the catalyst device 4, while Fig. 25B shows a sectional view of the catalyst device 4. Also, in Fig. 25B, reference character C1 denotes the axis center of the catalyst carrier 40, reference character C2 denotes the axis center of the outer cylinder 43, and reference character L3 shows an eccentric amount.

In this case, if the exhaust pipe end portion 410A and the outer cylinder 43 are arranged eccentrically due to restriction of a layout space in the exhaust muffler 400 or the like, it becomes possible to lay out the exhaust pipe end portion 410A and the catalyst carrier 40 so that they are aligned coaxially only by the way of winding the holding mat 42.

Also, in the eleventh embodiment, an application example to the catalyst device for a motor cycle is explained, but not limited to that, the present invention can be applied to the catalyst device mounted on a three-wheeled vehicle, a four-wheeled vehicle or an automobile or the like classified as the other ATV (all-terrain vehicle) and purifying the exhaust gas from the exhaust pipe.

## Claims

1. A catalyst device, comprising:
a catalyst carrier (10, 40, 60) that carries a catalyst having an exhaust purification function;
an outer cylinder (13, 43, 63, 73, 83, 84, 421) that contains the catalyst carrier; and
a mat (12, 42, 62) disposed between the catalyst carrier and the outer cylinder, wherein
a high friction portion (14, 64, 74, 114) is disposed between the catalyst carrier and the outer cylinder so as to prevent movement of at least either of the catalyst carrier or the mat;
**characterized in that**
the high friction portion is formed by having the same catalyst as the catalyst carried by the catalyst carrier adhere to an inner face (13A) of the outer cylinder.

2. The catalyst device according to claim 1, wherein
the high friction portion (14, 64, 74, 114) is disposed in a region including at least either one of a portion in contact with an end portion (12C, 12D, 60A) of the mat (12, 42, 62) or its vicinity on the inner face (13A) of the outer cylinder (13, 43, 63, 73, 83, 84, 421).

3. The catalyst device according to claim 1, wherein
one end of the outer cylinder (13, 43, 63, 73, 83, 84, 421) located on the downstream side with respect to the flow of an exhaust gas is extended farther than an end portion (12C, 12D, 60A) of the mat (12, 42, 62), and the high friction portion (14, 64, 74, 114) is formed on this extended portion (16).

4. A catalyst device, comprising:
a catalyst carrier (10, 40, 60) that carries a catalyst having an exhaust purification function;
an outer cylinder (13, 43, 63, 73, 83, 84, 421) that contains the catalyst carrier; and
a mat (12, 42, 62) disposed between the catalyst carrier and the outer cylinder, wherein
a high friction portion (14, 64, 74, 114) is disposed between the catalyst carrier and the outer cylinder so as to prevent movement of at least either of the catalyst or the mat;
**characterized in that**
the high friction portion is formed by having the same catalyst as the catalyst carried inside the catalyst carrier adhere to a surface (11, 61) of the catalyst carrier.

5. The catalyst device according to claim 4, wherein
the high friction portion (14, 64, 74, 114) is disposed at least at a part of a portion in contact with the mat (12, 42, 62) on the surface (11, 61) of the catalyst carrier (10, 40, 60).

6. The catalyst device according to any one of claims 1 to 5, wherein
the catalyst carrier (10, 40, 60) is formed by ceramics.

7. The catalyst device according to claim 4, wherein
the high friction portion (14, 64, 74, 114) is formed by having the catalyst adhere also to the surface (11, 61) of the catalyst carrier (10, 40, 60) in a process in which the catalyst is made to be carried inside the catalyst carrier.

8. The catalyst device according to any one of claims 1 to 7, wherein
at least at a part of the inner face (13A) of the outer cylinder (13, 43, 63, 73, 83, 84, 421), a predetermined material that can be oxidized more easily than a stainless material in an exhaust gas of an internal combustion engine is arranged.

9. The catalyst device according to claim 8, wherein
the predetermined material is a material in which an oxidization reaction progresses at a temperature lower than the temperature at which the stainless material is oxidized in the exhaust gas of the internal combustion engine.

10. The catalyst device according to claim 8 or 9, wherein
the predetermined material is constituted by a general carbon steel.

11. The catalyst device according to any one of claims 8 to 10, wherein
in the predetermined material, an additive material of the same composition as the material forming the mat (12, 42, 62) or a composition containing a common element with the material forming the mat is added; and
the predetermined material is arranged at a position in contact with the mat on the inner surface of the outer cylinder (13, 43, 63, 73, 83, 84, 421).

12. A manufacturing method of a catalyst device, comprising:
a first process for forming an assembly unit (15) constituted by a ceramic catalyst carrier (10, 40, 60) carrying a catalyst having an exhaust purification function and a mat (12, 42, 62) wrapped around the outer side of the catalyst carrier that are contained in an outer cylinder;
**characterized by** further comprising
a second process of having a catalyst having an exhaust purification function adhere to the inside of the catalyst carrier contained in the assembly unit and a region including at least either one of a portion in contact with an end portion (12C, 12D, 60A) of the mat on the inner face (13A) of the outer cylinder or the vicinity thereof; and
a third process of sintering the assembly unit to which the catalyst is made to adhere.

13. A catalyst device, comprising:
a catalyst carrier (10, 40, 60) that carries a catalyst having an exhaust purification function;
an outer cylinder (13, 43, 63, 73, 83, 84, 421) that contains the catalyst carrier; and
a mat (12, 42, 62) disposed between the catalyst carrier and the outer cylinder, wherein
a high friction portion (14, 64, 74, 114) is disposed between the catalyst carrier and the outer cylinder so as to prevent movement of at least either of the catalyst carrier or the mat;
**characterized in that**
at a position in contact with the mat on the inner surface of the outer cylinder, a predetermined material that can be oxidized more easily than a stainless material in an exhaust gas of the internal combustion engine is arranged; and
in the predetermined material, an additive material of the same combustion as the material forming the mat or a composition containing a common element with the material forming the mat is added.

## Patentansprüche

1. Eine Katalysatorvorrichtung, die Folgendes umfasst:
einen Katalysatorträger (10, 40, 60), der einen Katalysator trägt, der eine Abgasreinigungs-Funktion hat;
einen äußeren Zylinder (13, 43, 63, 73, 83, 84, 421), der den Katalysatorträger enthält; und
eine Matte (12, 42, 62), die zwischen dem Katalysatorträger und dem äußeren Zylinder angeordnet wird, wobei
ein Abschnitt mit hoher Reibung (14, 64, 74, 114) zwischen dem Katalysatorträger und dem äußeren Zylinder angeordnet wird, sodass eine Bewegung von zumindest einem der Folgenden: des Katalysatorträgers oder der Matte verhindert wird;
**dadurch gekennzeichnet, dass**
der Abschnitt mit hoher Reibung gebildet wird, indem man den gleichen Katalysator wie den vom Katalysatorträger getragenen Katalysator an einer Innenseite (13A) des äußeren Zylinders zum Anhaften bringt.

2. Die Katalysatorvorrichtung nach Anspruch 1, wobei
der Abschnitt mit hoher Reibung (14, 64, 74, 114) in einem Bereich angeordnet wird, der zumindest einen unter den Folgenden beinhaltet: einen mit dem Endabschnitt (12C, 12D, 60A) der Matte (12, 42, 62) in Kontakt stehenden Abschnitt oder dessen benachbarter Bereich auf der Innenseite (13A) des äußeren Zylinders (13, 43, 63, 73, 83, 84, 421).

3. Die Katalysatorvorrichtung nach Anspruch 1, wobei
ein Ende des äußeren Zylinders (13, 43, 63, 73, 83, 84, 421), das sich an der stromabwärts gelegenen Seite bezüglich eines Abgasflusses befindet, weiter als ein Endabschnitt (12C, 12D, 60A) der Matte (12, 42, 62) verlängert wird, und wobei de Abschnitt mit hoher Reibung (14, 64, 74, 114) auf diesem verlängerten Abschnitt (16) gebildet wird.

4. Eine Katalysatorvorrichtung, die Folgendes umfasst:
einen Katalysatorträger (10, 40, 60), der einen Katalysator trägt, der eine Abgasreinigungs-Funktion hat;
einen äußeren Zylinder (13, 43, 63, 73, 83, 84, 421), der den Katalysatorträger enthält; und
eine Matte (12, 42, 62), die zwischen dem Katalysatorträger und dem äußeren Zylinder angeordnet wird, wobei
ein Abschnitt mit hoher Reibung (14, 64, 74, 114) zwischen dem Katalysatorträger und dem äußeren Zylinder angeordnet wird, sodass eine Bewegung von zumindest einen der Folgenden: des Katalysatorträgers oder der Matte verhindert wird;
**dadurch gekennzeichnet, dass**
der Abschnitt mit hoher Reibung gebildet wird, indem man den gleichen Katalysator wie den innerhalb des Katalysatorträgers getragenen Katalysator an einer Oberfläche (11, 61) des Katalysatorträgers zum Anhaften bringt.

5. Die Katalysatorvorrichtung nach Anspruch 4, wobei
der Abschnitt mit hoher Reibung (14, 64, 74, 114) zumindest an einem Teil eines Abschnitts angeordnet wird, der mit der Matte (12, 42, 62) auf der Oberfläche (11, 61) des Katalysatorträgers (10, 40, 60) in Kontakt steht.

6. Die Katalysatorvorrichtung nach irgendeinem der Ansprüche von 1 bis 5, wobei
der Katalysatorträger (10, 40, 60) aus Keramik gebildet wird.

7. Die Katalysatorvorrichtung nach Anspruch 4, wobei
der Abschnitt mit hoher Reibung (14, 64, 74, 114) gebildet wird, indem man den Katalysator ebenfalls an der Oberfläche (11, 61) des Katalysatorträgers (10, 40, 60) in einem Prozess zum Anhaften bringt, bei dem der Katalysator hergestellt wird, um in das Innere des Katalysatorträgers hinein befördert zu werden.

8. Die Katalysatorvorrichtung nach irgendeinem der Ansprüche von 1 bis 7, wobei
zumindest an einem Teil der Innenseite (13A) des äußeren Zylinders (13, 43, 63, 73, 83, 84, 421) ein vorbestimmtes Material angeordnet wird, das in einem Abgas einer Brennkraftmaschine leichter oxidierbar ist, als ein rostfreies Material.

9. Die Katalysatorvorrichtung nach Anspruch 8, wobei
das vorbestimmte Material ein Material ist, bei dem eine Oxidationsreaktion bei einer niedrigeren Temperatur fortschreitet, als die Temperatur, bei der das rostfreie Material im Abgas der Brennkraftmaschine oxidiert wird.

10. Die Katalysatorvorrichtung nach Anspruch 8 oder 9, wobei
das vorbestimmte Material aus einem generellen Kohlenstoffstahl besteht.

11. Die Katalysatorvorrichtung nach irgendeinem der Ansprüche von 8 bis 10, wobei
dem vorbestimmten Material ein Zusatzmaterial mit derselben Zusammensetzung zugegeben wird, wie das Material, das die Matte (12, 42, 62) bildet, oder mit einer Zusammensetzung, die mit dem die Matte bildenden Material ein gemeinsames Element enthält; und wobei
das vorbestimmte Material an einer Stelle angeordnet wird, die mit der Matte in Kontakt steht, auf der inneren Oberfläche des äußeren Zylinders (13, 43, 63, 73, 83, 84, 421).

12. Ein Verfahren zur Herstellung einer Katalysatorvorrichtung, das Folgendes umfasst:
einen ersten Prozess zur Bildung einer Montageeinheit (15), die zusammengesetzt ist aus einem keramischen Katalysatorträger (10, 40, 60), der einen Katalysator trägt, der eine Abgasreinigungs-Funktion hat, und einer Matte (12, 42, 62), die um die Außenseite des Katalysatorträgers geschlungen ist, die in einem äußeren Zylinder aufgenommen werden;
**gekennzeichnet dadurch, dass** es des Weiteren Folgendes umfasst:
einen zweiten Prozess, der darin besteht, einen Katalysator mit einer Abgasreinigungs-Funktion an der Innenseite des Katalysatorträgers zum Anhaften zu bringen, der in der Montageeinheit enthalten ist, und an einem Bereich, der zumindest einen unter den Folgenden beinhaltet: einen Abschnitt, der mit einem Endabschnitt (12C, 12D, 60A) der Matte auf der Innenseite (13A) des äußeren Zylinders in Kontakt steht oder einen benachbarten Bereich davon; und
einen dritten Prozess der Sinterung der Montageeinheit, an die der Katalysator zum Anhaften gebracht wird.

13. Eine Katalysatorvorrichtung, die Folgendes umfasst:
einen Katalysatorträger (10, 40, 60), der einen Katalysator trägt, der eine Abgasreinigungs-Funktion hat;
einen äußeren Zylinder (13, 43, 63, 73, 83, 84, 421), der den Katalysatorträger enthält; und
eine Matte (12, 42, 62), die zwischen dem Katalysatorträger und dem äußeren Zylinder angeordnet wird, wobei
ein Abschnitt mit hoher Reibung (14, 64, 74, 114) zwischen dem Katalysatorträger und dem äußeren Zylinder angeordnet wird, sodass eine Bewegung von zumindest einem der Folgenden: des Katalysatorträgers oder der Matte verhindert wird;
**dadurch gekennzeichnet, dass**
an einer Stelle, die mit der Matte in Kontakt steht, auf der inneren Oberfläche des äußeren Zylinders, ein vorbestimmtes Material angeordnet wird, das in einem Abgas einer Brennkraftmaschine leichter oxidierbar ist, als ein rostfreies Material;
und dass dem vorbestimmten Material ein Zusatzmaterial mit derselben Zusammensetzung zugegeben wird, wie das Material, das die Matte bildet, oder mit einer Zusammensetzung, die mit dem die Matte bildenden Material ein gemeinsames Element enthält.

## Revendications

1. Dispositif catalyseur, comprenant :
un support de catalyseur (10, 40, 60) qui supporte un catalyseur possédant une fonction d'épuration d'échappement ;
un cylindre extérieur (13, 43, 63, 73, 83, 84, 421) qui contient le support de catalyseur ; et un mat (12, 42, 62) disposé entre le support de catalyseur et le cylindre extérieur, dans lequel
une portion à haute friction (14, 64, 74, 114) est disposée entre le support de catalyseur et le cylindre extérieur afin d'empêcher le mouvement d'au moins l'un ou l'autre du support de catalyseur ou du mat ;
**caractérisé en ce que**
la portion à haute friction est formée en faisant en sorte que le même catalyseur que le catalyseur supporté par le support de catalyseur adhère à une face intérieure (13A) du cylindre extérieur.

2. Dispositif catalyseur selon la revendication 1, dans lequel
la portion à haute friction (14, 64, 74, 114) est disposée dans une région incluant au moins l'un ou l'autre d'une portion en contact avec une portion d'extrémité (12C, 12D, 60A) du mat (12, 42, 62) ou de son voisinage sur la face intérieure (13A) du cylindre extérieur (13, 43, 63, 73, 83, 84, 421).

3. Dispositif catalyseur selon la revendication 1, dans lequel
une extrémité du cylindre extérieur (13, 43, 63, 73, 83, 84, 421) située sur le côté aval par rapport à l'écoulement d'un gaz d'échappement est étendue plus loin qu'une portion d'extrémité (12C, 12D, 60A) du mat (12, 42, 62), et la portion à haute friction (14, 64, 74, 114) est formée sur cette portion étendue (16).

4. Dispositif catalyseur, comprenant :
un support de catalyseur (10, 40, 60) qui supporte un catalyseur possédant une fonction d'épuration d'échappement ;
un cylindre extérieur (13, 43, 63, 73, 83, 84, 421) qui contient le support de catalyseur ; et un mat (12, 42, 62) disposé entre le support de catalyseur et le cylindre extérieur, dans lequel
une portion à haute friction (14, 64, 74, 114) est disposée entre le support de catalyseur et le cylindre extérieur afin d'empêcher le mouvement d'au moins l'un ou l'autre du catalyseur ou du mat ;
**caractérisé en ce que** la portion à haute friction est formée en faisant en sorte que le même catalyseur que le catalyseur supporté à l'intérieur du support de catalyseur adhère à une surface (11, 61) du support de catalyseur.

5. Dispositif catalyseur selon la revendication 4, dans lequel
la portion à haute friction (14, 64, 74, 114) est disposée au moins sur une partie d'une portion en contact avec le mat (12, 42, 62) sur la surface (11, 61) du support de catalyseur (10, 40, 60).

6. Dispositif catalyseur selon l'une quelconque des revendications 1 à 5, dans lequel le support de catalyseur (10, 40, 60) est formé par de la céramique.

7. Dispositif catalyseur selon la revendication 4, dans lequel
la portion à haute friction (14, 64, 74, 114) est formée en faisant en sorte que le catalyseur adhère également à la surface (11, 61) du support de catalyseur (10, 40, 60) dans un procédé dans lequel il est fait en sorte que le catalyseur soit supporté à l'intérieur du support de catalyseur.

8. Dispositif catalyseur selon l'une quelconque des revendications 1 à 7, dans lequel au moins à une partie de la face intérieure (13A) du cylindre extérieur (13, 43, 63, 73, 83, 84, 421), un matériau prédéterminé qui peut être oxydé plus facilement qu'un matériau inoxydable dans un gaz d'échappement d'un moteur à combustion interne est agencé.

9. Dispositif catalyseur selon la revendication 8, dans lequel
le matériau prédéterminé est un matériau dans lequel une réaction d'oxydation progresse à une température inférieure à la température à laquelle le matériau inoxydable est oxydé dans le gaz d'échappement du moteur à combustion interne.

10. Dispositif catalyseur selon la revendication 8 ou 9, dans lequel le matériau prédéterminé est constitué par un acier au carbone général.

11. Dispositif catalyseur selon l'une quelconque des revendications 8 à 10, dans lequel dans le matériau prédéterminé, un matériau additif de la même composition que le matériau formant le mat (12, 42, 62) ou une composition contenant un élément commun avec le matériau formant le mat est ajoutée ; et
le matériau prédéterminé est agencé à une position en contact avec le mat sur la surface intérieure du cylindre extérieur (13, 43, 63, 73, 83, 84, 421).

12. Procédé de fabrication d'un dispositif catalyseur, comprenant :
un premier procédé pour former une unité d'assemblage (15) constituée par un support de catalyseur en céramique (10, 40, 60) supportant un catalyseur possédant une fonction d'épuration d'échappement et un mat (12, 42, 62) enveloppé autour du côté extérieur du support de catalyseur qui sont contenus dans un cylindre extérieur ;
**caractérisé en ce qu'**il comprend en outre
un deuxième procédé pour faire en sorte qu'un catalyseur possédant une fonction d'épuration d'échappement adhère à l'intérieur du support de catalyseur contenu dans l'unité d'assemblage et une région incluant au moins l'un ou l'autre d'une portion en contact avec une portion d'extrémité (12C, 12D, 60A) du mat sur la face intérieure (13A) du cylindre extérieur ou le voisinage de celle-ci ; et
un troisième procédé pour fritter l'unité d'assemblage à laquelle il est fait en sorte que le catalyseur adhère.

13. Dispositif catalyseur, comprenant :
un support de catalyseur (10, 40, 60) qui supporte un catalyseur possédant une fonction d'épuration d'échappement ;
un cylindre extérieur (13, 43, 63, 73, 83, 84, 421) qui contient le support de catalyseur ; et un mat (12, 42, 62) disposé entre le support de catalyseur et le cylindre extérieur, dans lequel
une portion à haute friction (14, 64, 74, 114) est disposée entre le support de catalyseur et le cylindre extérieur afin d'empêcher le mouvement d'au moins l'un ou l'autre du support de catalyseur ou du mat ;
**caractérisé en ce que**
à une position en contact avec le mat sur la surface intérieure du cylindre extérieur, un matériau prédéterminé qui peut être oxydé plus facilement qu'un matériau inoxydable dans un gaz d'échappement du moteur à combustion interne est agencé ; et
dans le matériau prédéterminé, un matériau additif de la même combustion que le matériau formant le mat ou une composition contenant un élément commun avec le matériau formant le mat est ajouté.
